# EUROPÄISCHE PATENTSCHRIFT

(11) **EP 2 078 965 B1**
(45) Veröffentlichungstag und Bekanntmachung des Hinweises auf die Patenterteilung: **26.10.2016**
(21) Anmeldenummer: 08022524.6
(22) Anmeldetag: 30.12.2008
(51) Int. Cl.: G01S 19/07, G01S 19/08

(54) **Überwachungseinrichtung für ein augmentiertes satellitenbasiertes Positionsbestimmungssystem und augmentiertes satellitenbasiertes Positionsbestimmungssystem**
Monitoring device for an augmented satellite-based positioning system and augmented satellite-based positioning system
Dispositif de surveillance pour un système augmenté de détermination de position par satellite et système augmenté de détermination de position par satellite

(30) Priorität: 12.01.2008 DE 102008004068
(43) Veröffentlichungstag der Anmeldung: 15.07.2009
(73) Patentinhaber: THALES ATM GmbH, 70807 Korntal-Münchingen (DE)
(72) Erfinder: Ilg, Joachim, 70839 Gerlingen (DE); Kälberer, Ulrich, Dr., 70176 Stuttgart (DE); Gross, Ernst, 73650 Winterbach (DE); Glaser, Oswald, 70176 Stuttgart (DE)
(74) Vertreter: DREISS Patentanwälte PartG mbB

(56) Entgegenhaltungen:
- US-A- 5 831 576
- US-A1- 2006 132 358
- US-A1- 2006 158 372
- US-B1- 6 549 848
- US-B2- 6 809 683
- CARSTEN BUTZMUEHLEN ET AL: "PEGASUS - Prototype Development for EGNOS Data Evaluation First User Experiences with the EGNOS System Test-Bed" ION NTM 2001, 22-24 JANUARY 2001, LONG BEACH, CA,, 22. Januar 2001 (2001-01-22), Seiten 628-637, XP007915534
- THOMAS R ET AL: "The Local Area Augmentation System: an airport surface guidance application supporting the NASA runway incursion prevention system demonstration at the Dallas/Fort Worth International Airport" 20TH. DASC. THE 20TH. DIGITAL AVIONICS SYSTEMS CONFERENCE PROCEEDINGS. DAYTONA BEACH, FL, OCT. 14 - 18, 2001; [DIGITAL AVIONICS SYSTEMS CONFERENCE], NEW YORK, NY : IEEE, US, Bd. CONF. 20, 14. Oktober 2001 (2001-10-14), Seiten 2.E.3-1, XP002302206 ISBN: 978-0-7803-7034-0
- SOLEY S ET AL: "The Data Collection Network: EGNOS revealed", ENC (EUROPEAN NAVIGATION CONFERENCE) GNSS 2004,, 17 May 2004 (2004-05-17), pages 1-12, XP007922268,

## Beschreibung

Die Erfindung betrifft eine Überwachungseinrichtung für ein augmentiertes satellitenbasiertes Positionsbestimmungssystem. Eine solche Überwachungseinrichtung ist bspw. aus der Veröffentlichung Soley, S. et al.: "The Data Collection Network: EGNOS revealed", ENC GNSS 2004, 17.05.2004, Seiten 1-12, XP007922268 bekannt. Die bekannte Überwachungseinrichtung dient zur Durchführung einer Langzeitüberwachung einer Verfügbarkeit und einer Genauigkeit eines satellitengestützten augmentierten satellitenbasierten Positionsbestimmungssystems (SBAS) zum Zwecke dessen operativer Validierung für die zivile Luftfahrt.

Die erfindungsgemäße Überwachungseinrichtung ist durch Anspruch 1 definiert.

Die Erfindung betrifft außerdem ein augmentiertes satellitenbasiertes Positionsbestimmungssystem, das eine Überwachungeinrichtung gemäß Anspruch 1 aufweist. Ein satellitenbasiertes Positionsbestimmungssystem erlaubt es beispielsweise einem Flugzeug oder einem Fahrzeug mit Hilfe einer geeigneten Empfängeranordnung, die sich an Bord des Flugzeugs bzw. des Fahrzeugs befindet, seine geografische Position zu ermitteln. Die ermittelte Position kann beispielsweise zur Navigation verwendet werden.

Ein satellitenbasiertes Positionsbestimmungssystem umfasst üblicherweise ein Raumsegment, ein Nutzersegment sowie ein Kontrollsegment. Das Raumsegment umfasst mehrere Satelliten, die sich auf Umlaufbahnen um die Erde bewegen. Das Nutzersegment umfasst die Empfängeranordnungen zur Positionsbestimmung, die sich beispielsweise in einem Fahrzeug oder an Bord eines Flugzeugs befinden können. Das Kontrollsegment umfasst im Wesentlichen Einrichtungen zur Überwachung und zur Steuerung der Satelliten des Raumsegments.

Beim Betrieb des satellitenbasierten Positionsbestimmungssystems senden die Satelliten des Raumsegments Satellitensignale zur Erde, welche von den Empfängeranordnungen des Nutzersegments empfangen werden. Über die Satellitensignale werden Informationen über die Position der einzelnen Satelliten sowie Zeitinformationen an die Empfängeranordnungen übertragen. Jede Empfängeranordnung weist außer einer Empfangseinrichtung zum Empfangen der Satellitensignale eine lokale Uhr zur Zeitmessung auf. Durch Vergleichen der in den Satellitensignalen enthaltenen Zeitinformation mit der lokalen Uhr errechnet sich jede Empfängeranordnung die Signallaufzeit eines jeden Satellitensignals und daraus die üblicherweise als Pseudostrecke oder Pseudorange bezeichnete Entfernung eines jeden Satelliten von der Empfängeranordnung.

Während Uhren der einzelnen Satelliten miteinander synchronisiert sind und das Raumsegment somit eine einheitliche Zeitbasis aufweist, sind die lokalen Uhren der einzelnen Empfängeranordnungen nicht mit den Uhren des Raumsegments synchronisiert. Dies hat zur Folge, dass die ermittelte Pseudostrecke in der Regel nicht der tatsächlichen Entfernung des Empfängers zu den einzelnen Satelliten entspricht. Eine vom Empfänger auszuführende Berechnung zur Ermittlung seiner Position umfasst somit vier Unbekannte, nämlich drei Koordinaten der Position des Empfängers und die momentane Zeit der Zeitbasis des Raumsegments. Dementsprechend muss der Empfänger die Satellitensignale mindestens vier unterschiedlicher Satelliten empfangen, um seine Position bestimmen zu können. Typischerweise wertet der Empfänger, sofern möglich auch die Signale weiterer Satelliten aus, um die Genauigkeit der ermittelten Position zu erhöhen.

Bekannte und in Betrieb befindliche satellitenbasierte Positionsbestimmungssysteme sind das Global Positioning System (GPS) der USA und das russische Orbiting Navigation Satellitensystem (GLONASS). Das europäische System GALILEO befindet sich derzeit im Aufbau. Ähnliches gilt für das chinesische GNSS, das COMPASS bzw. BEIDOU heißt und voraussichtlich dieselben Frequenzbänder wie GALILEO nutzen wird. Derartige Positionsbestimmungssysteme werden allgemein als Globale Satellitennavigationssysteme (GNSS) bezeichnet Die Erfindung kann in Verbindung mit allen Varianten der Globalen Satellitennavigationssysteme angewendet werden.

Allerdings reichen die Verfügbarkeit und die Genauigkeit der satellitenbasierten Positionsbestimmungssysteme für bestimmte kritische Anwendungen der Luftfahrt, insbesondere für die Steuerung von Landeanflügen, nicht aus. Um diese Systeme dennoch für diese Anwendungen verwenden zu können, werden sie mit mindestens einer weiteren Komponente, wie beispielsweise einer Referenzstation angereichert, so dass ein augmentiertes satellitenbasiertes Positionsbestimmungssystem entsteht. Die Referenzstation sendet ein Korrektursignal, das von den Empfängeranordnungen, die sich in der Reichweite der Referenzstation befinden, empfangen wird. Anhand dieses Korrektursignals können die Empfängeranordnungen ihre Position deutlich genauer bestimmen, als dies unter alleiniger Verwendung eines satellitenbasierten Positionsbestimmungssystems möglich wäre. Es existieren bodenbasierte augmentierte satellitenbasierte Positionsbestimmungssysteme (Ground-Based Augmentation Systems, GBAS), bei welchen die Referenzstation als ortsfeste Bodenstation ausgeführt ist, sowie satellitenbasierte augmentierte Positionsbestimmungssysteme (Satellite-Based Augmentation Systems, SBAS), bei welchen mindestens ein Satellit vorgesehen ist, auf dem sich eine Referenzstation befindet.

Bodenbasierte augmentierte satellitenbasierte Positionsbestimmungssysteme arbeiten üblicherweise nach dem Prinzip der differenziellen Korrektur der mittels des satellitenbasierten Positionsbestimmungssystems ermittelten Pseudostrecken. Das heißt, die Referenzstation weist eine Empfangseinrichtung zum Empfangen der Satellitensignale und eine Sendeeinrichtung zum Senden des Korrektursignals auf. Beim Betrieb der Referenzstation wird anhand der Satellitensignale eine Position ermittelt, diese Position mit der bekannten tatsächlichen Position der Referenzstation verglichen und in Abhängigkeit von diesem Vergleich das Korrektursignal berechnet und über die Sendeeinrichtung gesendet. Die Empfängeranordnung an Bord des Flugzeugs oder des Fahrzeugs ermittelt die Pseudostrecken der einzelnen Satellitensignale, empfängt das Korrektursignal und korrigiert die Pseudostrecken anhand des Korrektursignals, um schließlich aus den korrigierten Pseudostrecken die geographische Position der Empfängeranordnung zu ermitteln.

Bei der Planung solcher augmentierter satellitenbasierter Positionsbestimmungssysteme muss ein geeigneter Standort der Referenzstation ermittelt werden, an welchem mit dem erweiterten satellitenbasierten Positionsbestimmungssystem die Position der einzelnen Empfänger dieses Systems möglichst genau ermittelt werden kann und an welchem das Positionsbestimmungssystem eine möglichst hohe Verfügbarkeit aufweist. Zur Evaluierung verschiedener Standorte werden üblicherweise Überwachungseinrichtungen eingesetzt.

Aus der US 2006/132 358 A1 ist ferner ein Verfahren zur Vorhersage der Verfügbarkeit eines augmentierten SBAS-Positionsbestimmungssystems bekannt.

Aus Butzmuehlen, Carsten et al.: PEGASUS - Prototype Development for EGNOS Data Evaluation - First User Experiences with the EGNOS System Test-Bed; ION NTM 2001, 22.-24. Januar 2001, Long Beach, CA, USA ist eine Überwachungseinrichtung in Form eines satellitengestützten augmentierten Positionsbestimmungssystems ohne Echtzeitfunktion bekannt.

Aus der US 6,809,683 B2 ist eine Überwachungseinrichtung in Form eines portablen Testgeräts für eine Bodenstation eines bodengestützten augmentierten satellitenbasierten Positionsbestimmungssystems bekannt. Dieses Testgerät weist eine erste Empfangseinrichtung zum Empfangen von mindestens einem Satellitensignal sowie eine zweite Empfangseinrichtung zum Empfangen des Korrektursignals der Bodenstation auf. Beim Betrieb des Testgeräts werden Daten des satellitenbasierten Positionsbestimmungssignals aus dem Satellitensignal sowie Daten des Korrektursignals erfasst. Anschließend werden diese Daten ausgewertet und überprüft, ob die Bodenstation funktionsfähig ist.

Nachteilig an diesem Testgerät ist, dass es vor allem den Einfluss der Bodenstation auf die Genauigkeit und die Verfügbarkeit des gesamten Positionsbestimmungssystems überprüft. Der Einfluss der Satelliten des Raumsegments bzw. der von ihnen ausgesendeten Satellitensignale auf die Genauigkeit und die Verfügbarkeit des gesamten Positionsbestimmungssystems wird bei diesem Testgerät nicht hinreichend genau ermittelt. Folglich besteht bei Verwendung dieses Testgeräts die Gefahr, dass die Genauigkeit oder die Verfügbarkeit des erweiterten satellitenbasierten Positionsbestimmungssystems falsch bewertet, im schlimmsten Fall sogar überschätzt wird. Außerdem ist es mit dem Testgerät nicht möglich, bei der Auswahl des Standorts der Referenzstation die sich mit der Zeit ändernden Empfangsbedingungen der Satellitensignale zu berücksichtigen.

Aufgabe der Erfindung ist es, eine Überwachungseinrichtung für ein augmentiertes satellitenbasiertes Positionsbestimmungssystem zu schaffen, mit welcher die Genauigkeit und die Verfügbarkeit des gesamten erweiterten satellitenbasierten Positionssystems mit hoher Präzision ermittelt werden kann.

Zur Lösung der Aufgabe wird eine Überwachungseinrichtung mit den Merkmalen des Anspruchs 1 vorgeschlagen.

Zum genauen Ermitteln der Genauigkeit und der Verfügbarkeit des gesamten Positionsbestimmungssystems müssen die Eigenschaften des Satellitensignals besonders berücksichtigt werden. Zu diesem Zweck weist die erfindungsgemäße Überwachungseinrichtung die Signalqualitätsermittlungsmittel auf. Der von den Signalqualitätsermittlungsmitteln ermittelte Parametersatz charakterisiert unmittelbar die Empfangsbedingungen beim Empfang des Satellitensignals. Dadurch können auch graduelle Veränderungen der Empfangsbedingungen erkannt werden, was bei einer Überwachung von lediglich mittelbar mit den Empfangsbedingungen zusammenhängenden Parametern, wie beispielsweise einer Genauigkeit der Position oder einer Anzahl der empfangenen Satellitensignale nicht möglich wäre. Ferner trägt die Erfindung dazu bei die Integrität des Systems zu verbessern, da Fehler und Störeinflüsse bestimmt werden können.

Die Überwachungseinrichtung weist Verfügbarkeitsermittlungsmittel zum Ermitteln einer momentanen Verfügbarkeit des Positionsbestimmungssystems in Abhängigkeit von dem Parametersatz, dem weiteren Parametersatz, dem Positionsfehler und dem räumlichen Positionsunsicherheitsbereich auf. Es werden also in vorteilhafter Weise mehrere Parameter des Positionsbestimmungssystems zu einer einzigen Information über die Verfügbarkeit verdichtet, die einfach weiterverarbeitet oder angezeigt werden kann.

Unter der momentanen Verfügbarkeit ist eine Aussage darüber zu verstehen, ob das erweiterte satellitenbasierte Positionsbestimmungssystem zum momentanen Zeitpunkt auch für kritische Anwendungen der Luftfahrt, wie beispielsweise einen Landeanflug, verwendet werden kann. Ist beispielsweise die Signalqualität des Satellitensignals zu schlecht oder der Positionsfehler zu groß, dann kann das Positionsbestimmungssystem nicht für Landeanflüge verwendet werden. Es ist somit nicht verfügbar.

Hierbei kann vorgesehen werden, dass zur Ermittlung der momentanen Verfügbarkeit für jeden Parameter des Parametersatzes, für jeden Parameter des weiteren Parametersatzes für den Positionsfehler und für den Positionsunsicherheitsbereich jeweils ein zulässiger Wertebereich vorgegeben wird. Es wird überprüft, ob die tatsächlichen Werte der Parameter der beiden Parametersätze, des tatsächliche Positionsfehlers und des tatsächliche Positionsunsicherheitsbereichs in ihren jeweiligen zulässigen Bereichen liegen. Liegen die tatsächlichen Werte innerhalb ihrer zulässigen Bereiche, dann stellen die Verfügbarkeitsermittlungsmittel fest, dass das Positionsbestimmungssystem momentan verfügbar ist.

Zur genaueren Überwachung des Positionsbestimmungssystems, insbesondere über einen längeren Zeitraum, weist die Überwachungseinrichtung Überprüfungsmittel zum Überprüfen von mindestens einer Kenngröße des Positionsbestimmungssystems in Abhängigkeit von der Position eines Satelliten des Positionsbestimmungssystems auf, der das Satellitensignal sendet. Das Ergebnis einer Überprüfung durch die Überprüfungsmittel, insbesondere, wenn sie über einen längeren Zeitraum durchgeführt wird, kann den Verfügbarkeitsermittlungsmitteln zugeführt werden, damit diese die Verfügbarkeit des Positionsbestimmungssystems für ein zukünftiges Zeitintervall mit einer guten Genauigkeit schätzen können. Auf diese Weise wird erreicht, dass die Verfügbarkeit für das zukünftige Zeitintervall anhand der Positionen der Satelliten innerhalb des zukünftigen Zeitintervalls geschätzt werden kann. Die Position des Satelliten für das zukünftige Zeitintervall kann anhand von Informationen über eine Umlaufbahn des Satelliten relativ leicht berechnet werden. Zum Schätzen der Verfügbarkeit des Positionierungssystems für das zukünftige Zeitintervall wird dann die von den Überprüfungsmitteln ermittelte Abhängigkeit der Kenngröße von der Position des Satelliten herangezogen.

Um einen bestimmten Standort einer als Bodenstation ausgeführten Referenzstation einfach evaluieren zu können, weisen die Überprüfungsmittel eine Anzeigeeinrichtung zum Anzeigen der mindestens einen Kenngröße für verschiedene Positionen des Satelliten auf. Hierdurch wird einem Planer des augmentierten satellitenbasierten Positionsbestimmungssystems ein Überblick über die zu erwartende Genauigkeit und Verfügbarkeit des Positionsbestimmungssystems gegeben. Hierbei ist besonders vorteilhaft, dass die Anzeigeeinrichtung zum Erzeugen einer Grafik eingerichtet ist, die die Kenngröße in Abhängigkeit von einem Horizontalwinkel (Azimut) und von einem Vertikalwinkel (Elevation) der Position des Satelliten bezogen auf die Position der Überwachungseinrichtung zeigt. Alternativ oder ergänzend kann vorgesehen werden, dass die Anzeigeeinrichtung zur Erzeugung einer Grafik eingerichtet ist, die den Wert der Kenngröße und/oder eine Verteilungsdichtefunktion der Kenngröße in Abhängigkeit von dem Vertikalwinkel (Elevation) der Position des Satelliten bezüglich der Position der Überwachungseinrichtung zeigt.

Es ist bevorzugt, dass die Überwachungseinrichtung Spektrumsüberwachungsmittel zum Ermitteln eines dritten Parametersatzes, der eine Rauschleistung des Satellitensignals und/oder mindestens eine statistische Kenngröße davon charakterisiert. Hierbei kann vorgesehen werden, dass die Spektrumsüberwachungsmittel eine Vergleicheranordnung zum Vergleichen der Rauchleistung und/oder der statistischen Kenngrößen davon mit einer vorgegebenen Störmaske, die einen kritischen Höchstwert einer Störsignalleistung charakterisiert, aufweisen.

Vorteilhafterweise umfasst die Überwachungseinrichtung Verfügbarkeitsermittlungsmittel zum Ermitteln einer für ein zukünftiges Zeitintervall geschätzten Verfügbarkeit des Positionsbestimmungssystems in Abhängigkeit von dem Parametersatz, dem weiteren Parametersatz, dem Positionsfehler und dem räumlichen Positionsunsicherheitsbereich. Unter der für das zukünftige Zeitintervall geschätzten Verfügbarkeit des Positionsbestimmungssystems ist eine Aussage darüber zu verstehen, ob das Positionsbestimmungssystems innerhalb des zukünftigen Zeitintervalls für die kritischen Anwendungen verwendet werden kann. Zur Ermittlung der für das zukünftige Zeitintervall geschätzten Verfügbarkeit des Positionsbestimmungssystems kann vorgesehen werden, dass die Verfügbarkeitsermittlungsmittel für das zukünftige Zeitintervall Werte für die beiden Parametersätze, den Positionsfehler sowie für den Positionsunsicherheitsbereich mittels eines geeigneten Prognosemodells ermitteln und überprüfen, ob die ermittelten Werte innerhalb der jeweils für sie zulässigen Bereich liegen. Liegt jeder ermittelte Wert innerhalb des gesamten zukünftigen Zeitintervalls innerhalb seines zulässigen Bereichs, dann stellen die Verfügbarkeitsermittlungsmittel fest, dass das Positionsbestimmungssystem für das zukünftige Zeitintervall voraussichtlich verfügbar sein wird.

Um beispielsweise einen Fluglotsen über die momentane Verfügbarkeit des Positionsbestimmungssystems zu informieren, kann vorgesehen werden, dass die Überwachungseinrichtungseinrichtung eine zweite Anzeigeeinrichtung zum Anzeigen der momentanen Verfügbarkeit des Positionsbestimmungssystems aufweist. Der Fluglotse kann dann gegebenenfalls den Piloten eines Flugzeugs darauf hinweisen, dass er beispielsweise zur Steuerung eines Landeanflugs das Positionsbestimmungssystem nicht verwenden darf.

Um dem Fluglotsen auch die Koordination zukünftiger Anflüge zu erleichtern, kann gemäß einer bevorzugten Ausführungsform der vorliegenden Erfindung vorgesehen werden, dass die Überwachungseinrichtung eine dritte Anzeigeeinrichtung zur Anzeige der für das zukünftige Zeitintervall geschätzten Verfügbarkeit des Positionsbestimmungssystems aufweist.

Es ist besonders bevorzugt, dass sich die zweite Anzeigeeinrichtung in Abhängigkeit von der momentanen Verfügbarkeit und/oder die dritte Anzeigeeinrichtung in Abhängigkeit für das zukünftige Zeitintervall geschätzten Verfügbarkeit entweder in einem ersten Anzeigezustand oder in einem zweiten Anzeigezustand befindet. Vorzugsweise umfassen die zweite Anzeigeeinrichtung und/oder die dritte Anzeigeeinrichtung eine erste, vorzugsweise rote Signalleuchte und eine zweite vorzugsweise grüne Signalleuchte, wobei jede Signalleuchte beispielsweise eine Leuchtdiode zum Erzeugen von Signallicht aufweisen kann. Wenn die Verfügbarkeitsübermittlungsmittel feststellen, dass das Positionsbestimmungssystem momentan nicht verfügbar ist, dann wird die erste Signalleuchte aktiviert, und wenn die Verfügbarkeitsermittlungsmittel feststellen, dass das Positionsermittlungssystem momentan verfügbar ist, dann wird die zweite Signalleuchte aktiviert. In entsprechender Weise können auch in Abhängigkeit von der von den Verfügbarkeitsermittlungsmitteln für das zukünftige Zeitintervall geschätzten Verfügbarkeit die erste und die zweite Signalleuchte der dritten Anzeigeeinrichtung aktiviert werden. Anstelle der Signalleuchten kann auch ein Bildschirm beispielsweise eines Terminals oder eines Personal-Computers vorgesehen werden, der zum Anzeigen entsprechender Bereiche zur Anzeige der Verfügbarkeit eingerichtet ist, die in Abhängigkeit von der momentanen bzw. der für das zukünftige Zeitintervall geschätzten Verfügbarkeit entweder rot oder grün oder mit beliebigen anderen Farben gefärbt sind.

Es ist bevorzugt, dass die mindestens eine Kenngröße, die von den Überprüfungsmitteln überprüft wird, den Positionsfehler, mindestens ein Parameter des Parametersatzes und/oder eine statistische Kenngröße davon, insbesondere ein Mittelwert oder eine Standardabweichung, ist. Denn dies sind relevante Parameter zur Bewertung der Genauigkeit und der Verfügbarkeit des satellitenbasierten Positionsbestimmungssystems.

Ein Teil der Erfindung bezieht sich auf die Prüfung des VHF-Korrektursignals der Referenzstation, das üblicherweise als "VHF Data Broadcast" (VDB) bezeichnet wird. Um die Signalqualität des Korrektursignals zu ermitteln, kann vorgesehen werden, dass der von den weiteren Signalqualitätsermittlungsmitteln ermittelte weitere Parametersatz unter anderem die Ergebnisse der übergeordneten Prüfung des Formats und der Nachrichtenrate und/oder ein Träger-zu-Rauschdichte-Verhältnis des Korrektursignals umfasst. Insbesondere kann hierbei vorgesehen werden, dass der von den weiteren Signalqualitätsermittlungsmitteln ermittelte weitere Parametersatz als Parameter eine Abweichung einer Nachrichtenrate von im Korrektursignal enthaltenen Nachrichten von einer vorgegebenen Sollnachrichtenrate, eine Anzahl empfangener Nachrichten, einen Anteil fehlerhafter Nachrichten an den empfangenen Nachrichten und/oder ein Träger-zu-Rauschdichte-Verhältnis des Korrektursignals umfasst.

Ein weiterer Teil der Erfindung bezieht sich auf die Prüfung der GNSS-Satellitensignale. Hierbei ist bevorzugt, entweder ein GPS Signal, ein GLONASS-Signal, ein COMPASS-Signal oder ein GALILEO-Signal zu verwenden. Dabei wird das GPS Signal im so genannten L1-Band und/oder im so genannten L2-Band und/oder L5-Band verwendet, wobei sowohl das L1-Band als auch das L5-Band in einem für aeronautische Anwendungen geschützten Bandbereich liegen, während das L2-Band für andere, zum Beispiel kommerzielle Anwendungen vorgesehen ist. Bei GALILEO können die Satellitensignale im L1-Band, im E6-Band sowie im E5a und E5b Band verwendet werden. Das L1-Band sowie E5a und E5b liegen auch hier in dem geschützten Bandbereich, während E6 eher für kommerzielle Anwendungen vorgesehen ist. Als Besonderheit wird es voraussichtlich möglich sein, die kohärenten Signale auf E5a und E5b als gemeinsames E5ab Signal mit signifikant besserer Mehrwegeunterdrückung zu verwenden. Das chinesische GNSS COMPASS wird voraussichtlich Satellitensignale im L1-Band, im E6-Band sowie im E5b-Band anbieten. Die Überwachung des GNSS Satellitensignals umfasst vier Teilfunktionen:
- Positionsfehlerermittlungsfunktion
- Positionsunsicherheitsüberwachungsfunktion
- GPS Signalqualitätsüberwachungsfunktion
- Spektrumsüberwachungsfunktion.

Zur Ausführung dieser Funktionen weist die erfindungsgemäße Überwachungseinrichtung die Positionsfehlerermittlungsmittel, die Positionsunsicherheitsüberwachungsmittel, die Signalqualitätsermittlungsmittel und vorzugsweise die Spektrumsüberwachungsmittel auf.

Es ist bevorzugt, dass der von den Positionsunsicherheitsüberwachungsmitteln ermittelte Positionsunsicherheitsbereich mindestens einem Konfidenzintervall für eine vorgegebene Vertrauenswahrscheinlichkeit entspricht. Hierbei ist vorzugsweise für jede Koordinate der von dem Positionsbestimmungssystem ermittelten Position je ein Konfidenzintervall vorgesehen. Die Konfidenzintervalle entsprechen demjenigen räumlichen Bereich, innerhalb dem die tatsächliche Position mit einer Wahrscheinlichkeit liegt, welcher der Vertrauenswahrscheinlichkeit entspricht. Diese Konfidenzintervalle werden auch als "Protection Level" bezeichnet.

Um die Signalqualität des Satellitensignals gut ermitteln zu können, ist bevorzugt, dass der Parametersatz als Parameter ein Träger-zu-Rauschdichte-Verhältnis des Satellitensignals, ein Signal-zu-Rausch-Verhältnis des Satellitensignals und/oder eine Pseudostreckendifferenz zwischen einer Pseudostrecke eines Codes des Satellitensignals und einer Pseudostrecke eines Träger des Satellitensignals umfasst. Mittels des Träger-zu-Rauschdichte-Verhältnisses oder des Signal-zu-Rausch-Verhältnisses kann die Signalqualität des Satellitensignals unabhängig von der Qualität der Positionsbestimmung überwacht werden. Die Pseudostreckendifferenz, die auch als "Code Minus Carrier" (CMC) bezeichnet wird, eignet sich besonders zum Erkennen und zum Quantifizieren einer Mehrwegeausbreitung des Satellitensignals.

Obwohl die Erfindung in Verbindung mit einem beliebigen satellitenbasierten Positionsbestimmungssystem (GNSS) anwendbar ist und für das Korrektursignal beliebige Frequenzbereiche ausgewählt werden können, ist bevorzugt, dass das Satellitensignal ein GPS-Satellitensignal und/oder das Korrektursignal ein VHF-Signal ist.

Als weitere Lösung der Aufgabe wird ein augmentiertes satellitenbasiertes Positionsbestimmungssystem mit den Merkmalen des Anspruchs 14 vorgeschlagen. Das Positionsbestimmungssystem weist somit die Vorteile der erfindungsgemäßen Überwachungseinrichtung auf.

Die erfindungsgemäße Überwachungseinrichtung kann insbesondere für eine der nachfolgenden Verwendungen eingesetzt werden:
- zur Evaluation von Standorten einer Referenzstation eines augmentierten satellitenbasierten Positionsbestimmungssystems bei der Planung und/oder bei der Installation eines erweiterten satellitenbasierten Positionsbestimmungssystems,
- zur Langzeitüberwachung des augmentierten satellitenbasierten Positionsbestimmungssystems oder
- zur Überwachung und/oder Anzeige einer Verfügbarkeit des augmentierten satellitenbasierten Positionsbestimmungssystems.

Es wird erreicht, dass beispielsweise Fluglotsen eine momentane oder voraussichtlich erst in Zukunft auftretende Unterbrechung der Verfügbarkeit des Positionsbestimmungssystems schnell erkennen und entsprechend reagieren können.

Weitere Merkmale und Vorteile der Erfindung ergeben sich aus der nachfolgenden Beschreibung, in welcher exemplarische Ausführungsformen anhand der Zeichnungen näher erläutert werden. Dabei zeigen:
- Figur 1: ein augmentiertes satellitenbasiertes Positionsbestimmungssystem mit einer Überwachungseinrichtung in schematischer Darstellung;
- Figur 2: eine detaillierte Darstellung der Überwachungseinrichtung aus Figur 1;
- Figur 3: ein mittleres Signal-zu-Rausch-Verhältnis eines Satellitensignals in Abhängigkeit von einer Position eines Satelliten;
- Figur 4: eine Standardabweichung des Signal-zu-Rausch-Verhältnisses aus Figur 3;
- Figur 5: ein mittlerer Pseudostreckenfehler des Satellitensignals in Abhängigkeit von der Position des Satelliten;
- Figur 6: eine Standardabweichung des Pseudostreckenfehlers aus Figur 5;
- Figur 7: eine Wahrscheinlichkeitsdichtefunktion einer mittleren Pseudostreckendifferenz; und
- Figur 8: eine Wahrscheinlichkeitsdichtefunktion einer Standardabweichung der Pseudostreckendifferenz aus Figur 7.

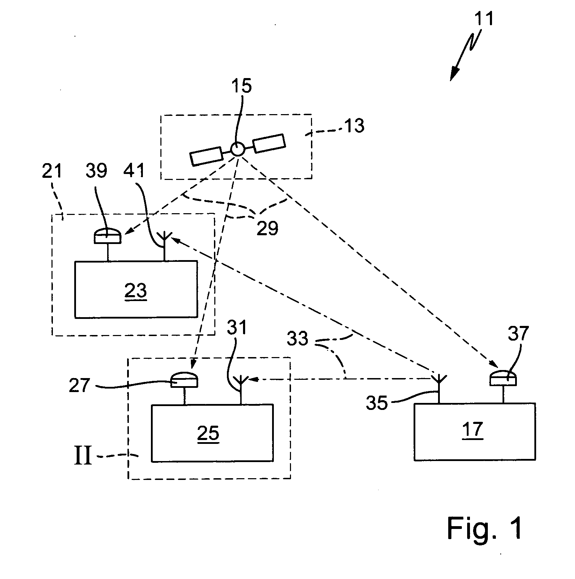

Figur 1 zeigt ein augmentiertes satellitenbasiertes Positionsbestimmungssystem, welches insgesamt mit dem Bezugszeichen 11 versehen ist. Das Positionsbestimmungssystem 11 weist ein Raumsegment 13 auf, welches mehrere Satelliten 15 umfasst. In Figur 1 ist lediglich ein solcher Satellit 15 dargestellt. Des Weiteren weist das Positionsbestimmungssystem 11 eine Referenzstation 17 auf, die in der gezeigten Ausführungsform als eine ortsfeste Bodenstation ausgeführt ist. Es handelt sich bei dem gezeigten Positionsbestimmungssystem also um ein bodengestütztes augmentiertes satellitenbasiertes Positionsbestimmungssystem (GBAS). In einer nicht gezeigten Ausführungsform wird das Korrektursignal von einem geostationären Satelliten ausgestrahlt. Es handelt sich bei dieser nicht gezeigten Ausführungsform also um ein raumbasiertes augmentiertes satellitenbasiertes Positionsbestimmungssystem (SBAS), bei welchem der geostationäre Satellit die Referenzstation 17 bildet.

Außerdem weist das Positionsbestimmungssystem 11 ein Nutzersegment 21 mit vielen Empfängeranordnungen, die beispielsweise an Bord eines Flugzeuges oder eines Fahrzeuges vorhanden sein können. In Figur 1 ist exemplarisch nur eine solche Empfängeranordnung 23 dargestellt. Diese Empfängeranordnung 23 befindet sich an Bord eines Flugzeugs und wird im Folgenden auch als Endnutzerempfängeranordnung 23 bezeichnet.

In der gezeigten Ausführungsform ist der Satellit 15 beispielhaft ein Satellit des "Global Positioning System" (GPS) der USA und die Empfängeranordnung dementsprechend ein GPS-Empfänger. Die vorliegende Erfindung kann jedoch auch in Verbindung mit anderen Positionsbestimmungssystemen wie beispielsweise GLONASS oder GALILEO realisiert werden.

Ferner weist das Positionsbestimmungssystem eine Überwachungseinrichtung 25 auf. Die Überwachungseinrichtung umfasst eine erste Empfangseinrichtung 27 zum Empfangen von mindestens einem Satellitensignal 29, vorzugsweise aller empfangbaren Satellitensignale 29. Des Weiteren weist die Überwachungseinrichtung 25 eine zweite Empfangseinrichtung 31 zum Empfangen eines Korrektursignals 33 der Referenzstation 17 auf. Zum Senden des Korrektursignals 33 weist die Referenzstation eine Sendeeinrichtung 35 auf. Der Satellit 15 weist Mittel (nicht gezeigt) zum Senden des Satellitensignals 29 auf.

Weiterhin weist die Referenzstation 17 eine dritte Empfangseinrichtung 37 zum Empfangen des Satellitensignals 29 auf. Damit die Endnutzerempfängeranordnung 23 des Nutzersegments 21 zur Ermittlung ihrer eigenen geographischen Position die beiden Signale 29, 33 empfangen kann, weist sie eine vierte Empfangsvorrichtung 39 zum Empfangen des Satellitensignals 29 sowie eine fünfte Empfangsvorrichtung 41 zum Empfangen des Korrektursignals 33 auf.

Bei dem Korrektursignal 33 handelt es sich in der gezeigten Ausführungsform um ein VHF-Signal. Dieses Signal wird bei in der Luftfahrt verwendeten augmentierten Positionsbestimmungssystemen 11 als "VHF Data Broadcast" (VDB) bezeichnet.

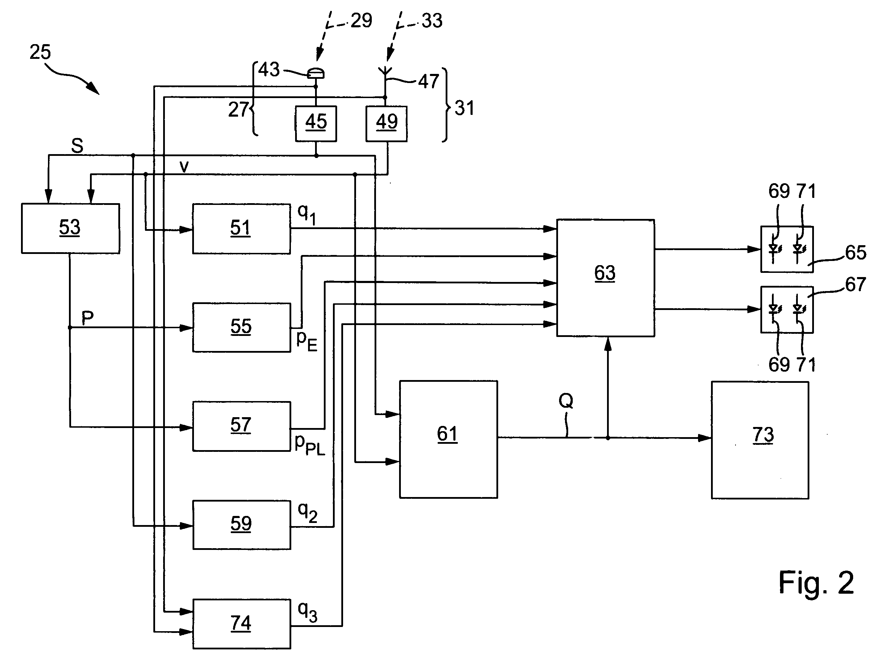

Figur 2 zeigt die Überwachungseinrichtung 25 näher im Detail. Man erkennt, dass die erste Empfangseinrichtung 27 eine Satellitenantenne 43 und eine mit der Satellitenantenne verbundene erste Empfangsschaltung 45 (GPS-Empfangsschaltung 45) aufweist. In ähnlicher Weise weist die zweite Empfangseinrichtung 31 der Überwachungseinrichtung 25 eine VHF-Antenne 47 auf, die an eine zweite Empfangsschaltung 49 (VDB-Empfangsschaltung 49) angeschlossen ist.

Ein Ausgang der zweiten Empfangsschaltung 49 ist mit einem Eingang von ersten Signalqualitätsermittlungsmitteln 51 (VDB-Monitorfunktion 51) der Überwachungseinrichtung 25 verbunden. Ein Ausgang der ersten Empfangsschaltung 45 sowie der Ausgang der zweiten Empfangsschaltung 49 sind mit Eingängen von Positionsberechnungsmitteln 53 zur Berechnung einer Position der Überwachungseinrichtung 25 aus dem Satellitensignal 29 und dem Korrektursignal 39 verbunden. Ein Ausgang der Positionsberechnungsmittel 53 ist mit einem Eingang von Positionsfehlerermittlungsmittel 55 der Überwachungseinrichtung 25 zum Ermitteln eines Positionsfehlers des Positionsbestimmungssystems 11 verbunden. Außerdem ist der Ausgang der Positionsberechnungsmittel 53 mit einem Eingang von Positionsunsicherheitsüberwachungsmitteln 57 der Überwachungseinrichtung 25 zum Ermitteln eines räumlichen Positionsunsicherheitsbereichs des Positionsbestimmungssystems 11 verbunden.

Ferner ist der Ausgang der ersten Empfangsschaltung 45 mit einem Eingang von zweiten Signalqualitätsermittlungsmitteln 59 (GPS-Signalqualitätsermittlungsmittel 59) der Überwachungseinrichtung 25 zum Ermitteln mindestens eines zweiten Parametersatzes q₂, der eine Qualität des Satellitensignals 29 charakterisiert, verbunden. Ein Ausgang jeder der beiden Antennen 43 und 47 ist mit je einem Eingang von Spektrumsüberwachungsmitteln 74 der Überwachungseinrichtung 25 verbunden.

Außerdem weist die Überwachungseinrichtung 25 Überprüfungsmittel 61 zum Überprüfen von Kenngrößen des Positionsbestimmungssystems 11 in Abhängigkeit von einer Position des Satelliten 15 auf. Die Ausgänge der ersten Empfangsschaltung 45 und der zweiten Empfangsschaltung 49 sind mit entsprechenden Eingängen der Überprüfungsmittel 61 verbunden.

Die Überwachungseinrichtung 25 weist Verfügbarkeitsermittlungsmittel 63 zum Ermitteln einer momentanen Verfügbarkeit des Positionsbestimmungssystem 11 sowie einer geschätzten Verfügbarkeit des Positionsbestimmungssystems 11 auf. Die ersten Signalqualitätsermittlungsmittel 51, die Positionsfehlerermittlungsmittel 55, die Positionsunsicherheitsüberwachungsmittel 57, die zweiten Signalqualitätsermittlungsmittel 59 und die Spektrumüberwachungsmittel 74 weisen je einen Ausgang auf, welcher mit einem entsprechenden Eingang der Verfügbarkeitsermittlungsmittel 63 verbunden ist. Ein Ausgang der Verfügbarkeitsermittlungsmittel 63 ist mit einem Eingang einer zweiten Anzeigeeinrichtung 65 der Überwachungseinrichtung 25 zum Anzeigen der momentanen Verfügbarkeit des Positionsbestimmungssystems 11 verbunden.

Außerdem weist die Überwachungseinrichtung 25 eine dritte Anzeigeeinrichtung 67 auf, und ein Eingang dieser dritten Anzeigeeinrichtung 67 ist an einen weiteren Ausgang der Verfügbarkeitsermittlungsmittel 63 angeschlossen. Sowohl die zweite Anzeigeeinrichtung 65 als auch die dritte Anzeigeeinrichtung 67 weisen jeweils eine erste Signalleuchte 69 mit einer Leuchtdiode sowie eine zweite Signalleuchte 71 mit einer weiteren Leuchtdiode auf. Die erste Signalleuchte 69 kann beispielsweise zur Abgabe von grünem Signallicht und die zweite Signalleuchte 71 kann beispielsweise zur Abgabe von rotem Signallicht ausgebildet sein. In einer nicht gezeigten Ausführungsform ist anstelle der Signalleuchten ein Bildschirm beispielsweise eines Computer-Terminals vorgesehen, der Bereiche zur Anzeige der momentanen Verfügbarkeit des Positionsbestimmungssystem 11 sowie der für das zukünftige Zeitintervall geschätzten Verfügbarkeit des Positionsbestimmungssystems 11 anzeigt.

Ein Ausgang der Überprüfungsmittel 61 ist mit einem Eingang einer ersten Anzeigeeinrichtung 73 der Überwachungseinrichtung 25 zum Anzeigen der von den Überprüfungsmitteln 61 überprüften Kenngrößen für verschiedene Positionen des Satelliten 15 verbunden. Die erste Anzeigeeinrichtung 73 kann als ein Rechnersystem wie beispielsweise ein Personal-Computer oder eine Grafik-Workstation ausgeführt sein.

Der Ausgang der Überprüfungsmittel 61 ist außerdem an einem weiteren Eingang der Verfügbarkeitsermittlungsmittel 63 der Überwachungseinrichtung 25 angeschlossen.

Im Folgenden wird die Funktionsweise des Positionsbestimmungssystems 11 unter Bezugnahme auf Figur 1 näher erläutert. Beim Betrieb des Positionsbestimmungssystems 11 sendet jeder Satellit 15 des Raumsegments 13 das Satellitensignal 29 aus. Die Referenzstation 17 empfängt das Satellitensignal 29 mittels der dritten Empfangseinrichtung 37. Aus dem Satellitensignal 29 berechnet die Referenzstation 17 in aus dem GPS bekannter Weise die Pseudostrecken zu den einzelnen Satelliten 15, die die Referenzstation 17 empfangen kann. Unter der Pseudostrecke zwischen dem Satelliten 15 und der Referenzstation 17 ist im Wesentlichen eine unter Verwendung einer lokalen Uhr der Referenzstation 17 anhand einer Signallaufzeit des Satellitensignals 29 ermittelte Entfernung zwischen dem Satelliten 15 und der Referenzstation 17 zu verstehen. Die Uhr der Referenzstation 17 ist nicht mit den Uhren des Raumsegments 13 synchronisiert. Die Pseudostrecke entspricht also in der Regel nicht der tatsächlichen Entfernung zwischen der Referenzstation 17 und dem Satelliten 15.

Da es sich bei der Referenzstation 17 um eine ortsfeste Bodenstation handelt, ist der Referenzstation 17 ihre eigene Position bekannt. Anhand der bekannten Position ermittelt die Referenzstation 17 Fehler dieser Pseudostrecken und berechnet aus diesen Pseudostreckenfehlern das Korrektursignal 33, welches sie mittels der Sendeeinrichtung 35 aussendet. Das heißt, die Referenzstation 17 arbeitet nach dem Prinzip des differenziellen GPS (DGPS).

Die Endnutzerempfängeranordnung 23 empfängt mittels der vierten Empfangsanordnung 39 das Satellitensignal 29 und mittels der fünften Empfangsanordnung 41 das Korrektursignal 33. Anhand des Satellitensignals 29 ermittelt die Endnutzerempfängeranordnung 23 die Pseudostrecken zwischen der Endnutzerempfängeranordnung 23 und denjenigen Satelliten 15 des Raumsegments 13, deren Satellitensignal 29 die Endnutzerempfängeranordnung 23 empfangen kann. Anschließend korrigiert die Endnutzerempfängeranordnung 23 die Pseudostrecken anhand des Korrektursignals 33. Durch diese Korrektur kann die Endnutzerempfängeranordnung 23 ihre eigene Position wesentlich genauer ermitteln, als dies ohne die Verwendung des Korrektursignals 33 möglich wäre. Dadurch kann die von der Endnutzerempfängeranordnung 23 ermittelte Position auch für kritische Anwendungen der Luftfahrt verwendet werden. In der gezeigten Ausführungsform wird die von der Endnutzerempfängeranordnung 23 ermittelte Position zur Steuerung eines Ladeanflugs des Flugzeugs, an Bord dessen sich die Endnutzerempfängeranordnung 23 befindet, verwendet.

Um den hohen Anforderungen der Anwendungen der Luftfahrt an die Verfügbarkeit und die Genauigkeit des Positionsbestimmungssystems 11 gerecht zu werden, wird das Positionsbestimmungssystem unter Verwendung der Überwachungseinrichtung 25 überwacht. Hierbei wird die Überwachungseinrichtung 25 bereits bei der Planung und der Installation des Positionsbestimmungssystems 11, insbesondere bei der Auswahl eines Standorts für die ortsfeste Referenzstation 17 verwendet. Hierbei wird für verschiedene Standorte der Referenzstation 17 die Verfügbarkeit und die Genauigkeit des Positionsbestimmungssystems 11 überwacht und in Abhängigkeit von Ergebnissen dieser Überwachungen der am besten geeignete Standort ausgewählt.

Nach der Inbetriebnahme des Positionsbestimmungssystems 11, insbesondere der Referenzstation 17 wird mit Hilfe der Überwachungseinrichtung 25 eine Langzeitüberwachung der Verfügbarkeit und der Genauigkeit des Positionsbestimmungssystems 11 durchgeführt. Dadurch werden zum einen Feinabstimmungen des Positionsbestimmungssystems 11 zur Erhöhung dessen Verfügbarkeit und dessen Genauigkeit vorgenommen. Zum anderen werden Verschlechterungen der Verfügbarkeit oder der Genauigkeit des Positionsbestimmungssystems 11, die während dessen Betriebszeit auftreten, erkannt und geeignete Gegenmaßnahmen ergriffen. So wird beispielsweise eine Konfiguration der Referenzstation an eine Veränderung von Umgebungsbedingungen angepasst.

Außerdem wird die Überwachungseinrichtung 25 zur ständigen Überwachung der Verfügbarkeit und der Genauigkeit des Positionsbestimmungssystems 11 zum Zwecke der Flugsicherung verwendet. Beispielsweise wird in einem Tower angezeigt, ob das Positionsbestimmungssystem 11 momentan verfügbar ist und ob es in einem zukünftigen Zeitintervall voraussichtlich verfügbar sein wird. Wird angezeigt, dass das Positionsbestimmungssystem 11 nicht verfügbar ist oder im zukünftigen Zeitintervall voraussichtlich nicht verfügbar sein wird, dann können Fluglotsen Piloten beispielsweise darauf hinweisen, dass das Positionsbestimmungssystem 11 nicht zur Steuerung eines Landeanflugs verwendet werden kann. Außerdem können Flugzeuge auf andere Landebahnen oder notfalls auch auf andere Flughäfen umgeleitet werden.

Im Folgenden wird anhand der Figuren 2 bis 7 die Funktionsweise der Überwachungseinrichtung 25 näher erläutert. Beim Betrieb der Überwachungseinrichtung 25 wird das Satellitensignal 29 von der Satellitenantenne 43 empfangen, und die erste Empfangsschaltung 45 erzeugt aus dem empfangenen Satellitensignal 29 ein erstes Zwischensignal s. Außerdem empfängt die VHF-Antenne 47 das Korrektursignal 33, und die zweite Empfangsschaltung 49 erzeugt aus dem empfangenen Korrektursignal 33 ein zweites Zwischensignal v. Aus den Zwischensignalen s, v ermitteln die Positionsberechnungsmittel 53 ein Positionssignal p. Über das Positionssignal p werden insbesondere die Pseudostrecken zwischen der Überwachungseinrichtung 25 und denjenigen Satelliten 13, deren Satellitensignal 29 von der ersten Empfangseinrichtung 27 empfangen werden kann, übertragen. Des Weiteren wird über das Positionssignal p eine in Abhängigkeit von dem ersten Zwischensignal s und dem zweiten Zwischensignal v ermittelte geographische Position der Überwachungseinrichtung 25 sowie eine unkorrigierte, lediglich unter Verwendung der Satellitensignale 29 ermittelte geographische Position der Überwachungseinrichtung 25 übertragen.

Die ersten Signalqualitätsermittlungsmittel 51 ermitteln in Abhängigkeit von dem zweiten Zwischensignal v einen ersten Parametersatz q₁, der eine Qualität des Korrektursignals 33 charakterisiert bezüglich den Parametern MT1, MT2 und MT4 gemäß ICAO, Annex 10. Das Korrektursignal 33 weist zeitlich aufeinander folgende Datenrahmen auf, die in mehrere Zeitschlitze unterteilt sind. In jedem Zeitschlitz wird ein Teilrahmen übertragen, der eine Nachricht des Korrektursignals 33 sowie Datenfelder für eine Vorwärtsfehlerkorrektur (FEC) und eine zyklische Redundanzprüfung (CRC) umfasst. Die ersten Signalqualitätsermittlungsmittel 51 dekodieren die Nachrichten und überprüfen die Felder für die Vorwärtsfehlerkorrektur und die zyklische Redundanzprüfung. Des Weiteren ermitteln die ersten Signalqualitätsermittlungsmittel 51 einzelne Parameter des ersten Parametersatzes q₁. Der erste Parametersatz q₁ umfasst insbesondere die folgende Parameter:
- Ein binärer Parameter, der angibt, ob die zeitliche Kontinuität des empfangenen Korrektursignals 33 besser ist als ein vorgegebener Schwellwert der die maximale Zeitspanne einer Empfangslücke angibt,
- ein binärer Parameter, der anzeigt, ob eine Nachricht in einen anderen Zeitschlitz als einen vorgegebenen Zeitschlitz empfangen wurde,
- ein binärer Parameter der angibt, ob eine zeitlich gemittelte Signalstärke des empfangenen Signals oberhalb eines Schwellwerts für die Signalstärke des Korrektursignals 33 liegt,
- ein Verhältnis der Anzahl der innerhalb der letzten Stunde empfangenen Nachrichten zu einem Sollwert von innerhalb einer Stunde zu empfangenen Nachrichten,
- eine momentane Signalstärke des empfangenen Korrektursignals 33,
- eine Anzahl der verlorenen Nachrichten des empfangenen Korrektursignals 33 seit dem letzten Neustart der Überwachungseinrichtung 25,
- eine Anzahl der unter Verwendung des Feldes für die Vorwärtskorrektur durchgeführten Korrekturen der Nachrichten,
- eine Anzahl der fehlenden Nachrichten, die auf CRC-Fehler zurückgeht.
- Kennungen der Zeitschlitze, in denen momentan Rahmen empfangen werden,
- ein binärer Parameter, der anzeigt, ob ein vorgegebener Schwellwert für einen Alarm momentan überschritten ist,
- eine Anzahl der Alarmbedingungen, welche vom letztgenannten Parameter angezeigt worden sind,
- die gesamte Dauer sämtlicher durch den vorletzten Parameter angezeigten Alarme.
- ein binärer Statusparameter der anzeigt, ob mindestens eine kritische Grenze von Parametern überschritten wurde.

Die ersten Signalqualitätsermittlungsmittel 51 weisen Anzeigeeinrichtungen (nicht gezeigt) zur Anzeige dieser Parameter auf. Zur Anzeige der binären Parameter können Anzeigeeinrichtungen ähnlich der gezeigten zweiten Anzeigeeinrichtung 65 oder dritten Anzeigeeinrichtung 67 vorgesehen werden. Es können auch Anzeigeeinrichtungen ähnlich der gezeigten ersten Anzeigeeinrichtung 73 vorgesehen werden.

Die Positionsfehlerermittlungsmittel 55 ermitteln in Abhängigkeit von dem Positionssignal p einen Positionsfehler des Positionsbestimmungssystems 11, indem sie das Positionssignal p auswerten und das ausgewertete Positionssignal mit der bekannten Position der Überwachungseinrichtung 25 vergleichen. Die Positionsfehlerermittlungsmittel 55 gegeben einen Positionsfehlerparametersatz p_{E} aus. Gemäß der gezeigten Ausführungsform wird der Positionsfehler durch folgende Parameter des Positionsfehlerparametersatz p_{E} charakterisiert:
- ein Positionsfehler der unkorrigierten ermittelten Position der Überwachungseinrichtung 25,
- ein Positionsfehler, der anhand des Korrektursignals 33 korrigierten Position der Überwachungseinrichtung 25,
- ein ternärer Statusparameter, der anzeigt, dass eine hinreichend genaue Position ermittelt worden ist und die oben genannten beiden Positionsfehler unterhalb vorgegebener Grenzwerte liegen, dass mindestens einer der oben genannten Positionsfehler oberhalb eines diesen Positionsfehler zugeordneten Schwellwerts liegt, oder dass momentan keine Position ermittelt werden kann,
- ein Positionsfehler der geografischen Breite, der eine Differenz zwischen der tatsächlichen geografischen Breite der Überwachungseinrichtung und einer ermittelten geografischen Breite charakterisiert,
- ein Fehler der geografischen Länge, der eine Differenz zwischen der tatsächlichen geografischen Längenkoordinate der Überwachungseinrichtung 25 und der ermittelten Längenkoordinate charakterisiert,
- ein Fehler der Höhe, der eine Differenz zwischen der tatsächlichen Höhe der Überwachungseinrichtung 25 und der ermittelten Höhe charakterisiert,
- ein Parameter, der den räumlichen Fehler zwischen der tatsächlichen Position der Überwachungseinrichtung 25 und der ermittelten Position charakterisiert,
- ein Parameter, der den Horizontalfehler zwischen der tatsächlichen Position der Überwachungseinrichtung 25 und der ermittelten Position charakterisiert,
- ein Betrag des Fehlers der Höhe (so genannter Vertikalfehler),
- eine Anzahl der Satelliten 25, deren Satellitensignal zur Ermittlung der Position bzw. des Positionsfehlers verwendet werden,
- eine Anzahl derjenigen Satelliten, zu denen eine Pseudostrecke momentan berechnet wird und welche einen Vertikalwinkel (Elevation) bezüglich der Überwachungseinrichtung 25 aufweisen, welcher größer ist als ein vorgegebener Mindestwinkel,
- ein binärer Statusparameter, der anzeigt, ob ein Alarm vorliegt, weil ein Schwellwert überschritten ist,
- eine Anzahl der seit dem letzten Neustart der Überwachungseinrichtung 25 aufgetretenen Alarme,
- eine Gesamtdauer der seit dem letzten Neustart der Überwachungseinrichtung 25 aufgetretenen Alarme.

Die Positionsfehlerermittlungsmittel 55 weisen Anzeigevorrichtungen (nicht gezeigt) zur Anzeige dieser Parameter auf. Diese Anzeigevorrichtungen können zur Erzeugung einer grafischen Darstellung der Parameter über der geografischen Breite und der geografischen Länge eingerichtet sein. Hierbei kann vorgesehen werden, dass die grafische Darstellung regelmäßig, nicht notwendigerweise periodisch, aktualisiert wird und dabei den Verlauf der Parameter innerhalb eines bestimmten Zeitintervalls, das zum momentanen Zeitpunkt endet, anzeigt. Die Anzeigeeinrichtungen können ähnlich wie die gezeigten Anzeigeeinrichtungen 65, 67, 73 ausgestaltet sein.

Die Positionsunsicherheitsüberwachungsmittel 57 ermitteln einen räumlichen Positionsunsicherheitsbereich des Positionsbestimmungssystems 11. Der Positionsunsicherheitsbereich entspricht zumindest im Wesentlichen einem Konfidenzintervall für eine vorgegebene Vertrauenswahrscheinlichkeit. Das heißt, mit einer Wahrscheinlichkeit, die der Vertrauenswahrscheinlichkeit entspricht, liegt eine von der Endnutzerempfängeranordnung 23 ermittelte Position innerhalb eines geographischen Bereiches, der dem Konfidenzintervall entspricht. Hierbei wird für die Vertikalrichtung ein vertikaler Positionsunsicherheitsbereich (Vertical Protection Level, VPL) und für die laterale Richtung ein lateraler Positionsunsicherheitsbereich (Lateral Protection Level, LPL) ermittelt. Um internationalen Standards zur Quantifizierung des Positionsunsicherheitsbereichs des Positionsbestimmungssystems 11 gerecht zu werden, entsprechen zumindest die meisten Parameter p_{PL}, die von den Positionsunsicherheitsüberwachungsmittel 57 ermittelt werden, den Vorgaben des Anhangs 10 des Übereinkommen über die internationale Zivilluftfahrt (ICAO, Annex 10).

Im Einzelnen ermitteln die Positionsunsicherheitsüberwachungsmittel 57 folgende Parameter P_{PL}:
- ein maximaler vertikaler Positionsunsicherheitsbereich,
- ein maximaler lateraler Positionsunsicherheitsbereich,
- ein binärer Parameter, der anzeigt, ob der vertikale Positionsunsicherheitsbereich unterhalb eines vorgegebenen Schwellwerts liegt,
- ein binärer Parameter, der anzeigt, ob der laterale Positionsunsicherheitsbereich unterhalb eines vorgegebenen Schwellwerts liegt,
- ein Parameter, der einen Maximalwert des Werts VEB gemäß ICAO, Annex 10 charakterisiert,
- ein Parameter, der einen Maximalwert des Werts LEB gemäß ICAO, Annex 10 charakterisiert,
- ein binärer Parameter, der angibt, ob alle Positionsunsicherheitsbereiche unterhalb ihrer zugeordneten Schwellwerte liegen,
- ein binärer Parameter, der angibt, ob momentan ein Schwellwert zur Auslösung eines Alarms überschritten ist,
- eine Anzahl der seit dem letzten Neustart der Überwachungseinrichtung 25 aufgetretenen Alarme,
- eine gesamte Dauer aller seit dem letzten Neustart der Überwachungseinrichtung 25 aufgetretenen Alarme.

Die Positionsunsicherheitsüberwachungsmittel 57 weisen Anzeigeeinrichtungen (nicht gezeigt) zum Anzeigen dieser Parameter p_{PL} auf. Die Anzeigeeinrichtungen zum Anzeigen der binären Parameter können ähnlich der zweiten Anzeigeeinrichtung 65 oder der dritten Anzeigeeinrichtung 67 ausgebildet sein.

Die zweiten Signalqualitätsermittlungsmittel 59 ermitteln einen zweiten Parametersatz q₂, der eine Qualität des Satellitensignals 29 charakterisiert. Der zweite Parametersatz q₂ umfasst folgende Parameter:
- ein Träger-zu-Rauschdichte-Verhältnis des GPS Satellitensignals,
- eine abgeleitete Pseudostreckendifferenz ("Code Minus Carrier") zwischen einer Pseudostrecke des Codes des Satellitensignals und einer Pseudostrecke der integrierten Trägerphase desselben Satellitensignals. Dabei wird die Pseudostreckendifferenz zeitlich differenziert, um mittelwertfreie Indikatoren zu besitzen.

- einen Korrelationssignalqualitätsindikator (SQM-Metrik gemäß dem ICAO-Standard, Annex 10), der mit einer Mehrzahl von Punkten der Codephasenkorrelation die Güte des Korrelationssignals abtastet und Veränderungen des Signals bezüglich Symmetrie oder Spitzendeformation detektiert. Die zeitliche Veränderung wird detektiert, indem die Korrelationshöhe relativ zur Korrelation am Trackingpunkt mittels Differenz von Prä-und Post-Korrelation gleichen Abstandes, sowie die Korrelationshöhe relativ zur Korrelation am Trackingpunkt mittels Summe von Prä- und Post-Korrelation gleichen Abstandes ermittelt wird. Jedoch ist in der gezeigten Ausführungsform diese bekannte Metrik weiter verfeinert, um störende Mittelwerte zu eliminieren und um die Sensitivität zu steigern, indem nun die Differenz zweier Filter mit unterschiedlichen Mittelungszeitkonstanten und den beschriebenen Metriken als Eingangsgrößen genützt, um den Qualitätsauswerteparameter zu erstellen.
- eine Interreceiverdifferenz der Pseudostrecke desselben Satellitensignals, die einen singulären Fehler eines GPS Receivers der Referenzstation 17 charakterisiert (B-Value gemäß ICAO Annex 10).
- der in die Pseudostrecken-Ebene rücktransformierte und auf den entsprechenden Satelliten 15 bezogene Fehler der Position.

Die Berechnung der Pseudostrecke des Codes und der Pseudostrecke des Trägers des Satellitensignals 29 kann in aus der Technik der GPS-Empfänger bekannter Weise vorgenommen werden. Ebenso wie beispielsweise die ersten Signalqualitätsermittlungsmittel 51 weisen auch die zweiten Signalqualitätsermittlungsmittel 59 Anzeigeeinrichtungen zur Anzeige zumindest eines Teils dieser Parameter auf. Diese können ähnlich wie die gezeigten Anzeigeeinrichtungen 65, 67, 73 ausgebildet werden.

Die Spektrumsüberwachungsmittel 74 ermitteln einen weiteren Parametersatz q₃, der ebenfalls eine Qualität des Satellitensignals 29 charakterisiert. Dabei wird überprüft, ob die Leistung eines möglichen HF Störers über einem Schwellwert einer wahlfreien Maske liegt. Falls eine Überschreitung des Schwellwerts der zulässigen Leistung detektiert wird, wird die zugehörige Leistung und Frequenz festgehalten. Dabei wird eine gesamte Störleistung bezogen auf die Frequenz ermittelt. Der dritte Parametersatz q₃ umfasst folgende Parameter:
- eine mittlere Rauschleistung und Standardabweichung der Rauschleistung des Satellitensignals 29,
- ein binärer Parameter, der anzeigt, ob die gesamte Störleistung einen kritischen Wert überschritten hat (Interferenzalarm),

Die Verfügbarkeitsermittlungsmittel 63 verknüpfen den ersten Parametersatz q₁, den Positionsfehlerparametersatz p_{E}, der den Positionsfehler charakterisiert, den Parametersatz p_{PL}, der den Positionsunsicherheitsbereich charakterisiert, den zweiten Parametersatz q₂, der die Qualität des Satellitensignals charakterisiert, und den dritten Parametersatz q₃ und ermitteln hierbei die momentane Verfügbarkeit des Positionsbestimmungssystems 11 und eine für ein zukünftiges Zeitintervall geschätzte Verfügbarkeit des Positionsbestimmungssystems. Die Verfügbarkeitsermittlungsmittel 63 steuern die zweite Anzeigeeinrichtung 65 in Abhängigkeit von der momentanen Verfügbarkeit des Positionsbestimmungssystems 11 an. Erkennen die Verfügbarkeitsermittlungsmittel 63, dass das Positionsbestimmungssystem 11 verfügbar wird, dann aktivieren sie die erste Signalleuchte 69 der zweiten Anzeigeeinrichtung 65 und deaktivieren die zweite Signalleuchte 71 der zweiten Anzeigeeinrichtung 65. Erkennen die Verfügbarkeitsermittlungsmittel 63, dass das Positionsbestimmungssystem 11 nicht mehr verfügbar ist, dann deaktivieren sie die erste Signalleuchte 61 der zweiten Anzeigeeinrichtung 65 und aktivieren die zweite Signalleuchte 71 der zweiten Anzeigeeinrichtung 65. In der gezeigten Ausführungsform ergibt sich somit ein grünes Signallicht der zweiten Anzeigeeinrichtung 65, wenn das Positionsbestimmungssystem momentan verfügbar ist. Wenn das Positionsbestimmungssystem 11 momentan nicht verfügbar ist, so ergibt sich ein rotes Signallicht. Abweichend hiervon können in einer anderen Ausführungsform auch andere Farben für das Signallicht gewählt werden.

Die Verfügbarkeitsermittlungsmittel 63 steuern in Abhängigkeit von der für das zukünftige Zeitintervall geschätzten Verfügbarkeit die Signalleuchten 69, 71 der dritten Anzeigeeinrichtung 67 an. Hierbei werden die beiden Signalleuchten 69, 71 der dritten Anzeigeeinrichtung 67 in gleicher Weise, wie die Signalleuchte 69, 71 der zweiten Anzeigeeinrichtung 65 wechselseitig in Abhängigkeit von der für das zukünftige Zeitintervall geschätzten Verfügbarkeit angesteuert, so dass sich ein grünes Signallicht der dritten Anzeigeeinrichtung 67 ergibt, wenn die Verfügbarkeitsermittlungsmittel 63 erkannt haben, dass das Positionsbestimmungssystem 11 für das zukünftige Zeitintervall voraussichtlich verfügbar sein wird. Andernfalls ergibt sich ein rotes Signallicht der dritten Anzeigeeinrichtung 67. Abweichend hiervon können auch bei der dritten Anzeigeeinrichtung 67 andere Farben des Signallichts vorgesehen werden.

Die Verfügbarkeitsermittlungsmittel 63 ermitteln insbesondere folgende Parameter:
- eine gesamte Kontinuität der Datenverbindung zwischen der Referenzstation 17 und der Überwachungseinrichtung 25,
- eine Anzahl der Satelliten, deren Satellitensignal 29 von der Überwachungseinrichtung 25 empfangen wird,
- eine Anzahl der Satelliten, deren Satellitensignal 29 zur Ermittlung der Position der Überwachungseinrichtung 25 benutzt wird.

Die Verfügbarkeitsermittlungsmittel 63 weisen Anzeigevorrichtungen (nicht gezeigt) zur Anzeige zumindest eines Teils dieser Parameter und - je nach Ausgestaltung der Überwachungseinrichtung 25 -zumindest einer Auswahl der Parametersätze q₁, pₑ, p_{PL}, q₂ und q₃ auf. Die Anzeigevorrichtungen können ähnlich den gezeigten Anzeigevorrichtungen 65, 67, 73 ausgebildet sein.

Die Überprüfungsmittel 61 der Überwachungseinrichtung 25 überprüfen Kenngrößen Q des Positionsbestimmungssystems 11 in Abhängigkeit von der Position des Satelliten 15. Die Position des Satelliten 15 wird hierbei mit Hilfe eines Horizontalwinkels (Azimut) und eines Vertikalwinkels (Elevation) numerisch dargestellt. Jeder Satellit 15 überträgt seine Position über das Satellitensignal 29. Die Überprüfungsmittel 61 werten diese Positionsinformation im Satellitensignal 29 aus, um die Position des Satelliten 15 zu ermitteln. Gleichzeitig ermitteln die Überprüfungsmittel 61 die Kenngrößen Q des Positionsbestimmungssystems 11. Die ermittelten Kenngrößen Q werden derjenigen Position des Satelliten 15 zugeordnet, in der sich der Satellit 15 zum Zeitpunkt des Erfassens der Kenngrößen Q befindet. Die Position wird zusammen mit den zugeordneten Kenngrößen Q in sogenannten Azimuth-Elevation-Bins gespeichert. Auf diese Weise sammeln die Überprüfungsmittel 61 im Laufe des Betriebs der Überwachungsstation 25 Informationen über die Abhängigkeit der Kenngröße von der Position des Satelliten 15. Da meistens die Satellitensignale 29 verschiedener Satelliten 15 gleichzeitig von der ersten Empfangseinrichtung 27 der Überwachungseinrichtung 25 empfangen werden, werten die Überprüfungsmittel 61 die Satellitensignale 29 der verschiedenen Satelliten 15 simultan aus.

Als Kenngrößen Q sind vorgesehen:
- ein Mittelwert und eine Standardabweichung der Interreceiverdifferenz der Pseudostrecke desselben Satellitensignals (B-Value gemäß ICAO, Annex 10)
- Mittelwert und Standardabweichung einer differentiellen Pseudostreckendifferenz zwischen der Pseudostrecke des Codes des Satellitensignals und der Pseudostrecke der integrierten Trägerphase des Satellitensignals,
- Mittelwert und Standardabweichung der Signalstärke zu Rauschleistungsverhältnis des Satellitensignals 29,
- Mittelwert und Standardabweichung der differentiellen Korrelationssignalqualitätsindikatoren
- Mittelwert und Standardabweichung der in die Pseudostrecken-Ebene rücktransformierte und auf den entsprechenden Satelliten bezogene Fehler der Position.

Da die Kenngrößen Q Rückschlüsse auf die Genauigkeit und die Verfügbarkeit des Positionsbestimmungssystems 11 erlauben und die Satelliten 15 Positionen, die sie einmal aufgesucht haben in Zukunft auch wieder aufsuchen werden, kann mittels der Informationen über die Abhängigkeit der Kenngrößen Q von der Position der Satelliten 15 die Genauigkeit des Abschätzens der Verfügbarkeit des Positionsbestimmungssystems 11 für das zukünftige Zeitintervall erhöht werden. Zu diesem Zweck werden die Informationen über die Abhängigkeit der Kenngrößen Q von der Position der Satelliten 15 den Verfügbarkeitsermittlungsmitteln 63 zugeführt. Die Verfügbarkeitsermittlungsmittel 63 berechnen für das zukünftige Zeitintervall die Satellitenbahnen der Satelliten 15. Unter Verwendung der sich aus diesen Bahnen ergebenden Positionen der Satelliten 15 und der von den Überprüfungsmittel 61 ermittelten Informationen über die Abhängigkeit der Kenngrößen Q von der Position der Satelliten 15 ermitteln die Verfügbarkeitsermittlungsmittel 63 einen geschätzten Verlauf der Kenngrößen Q für das zukünftige Zeitintervall. Der geschätzte Verlauf der Kenngrößen Q für das zukünftige Zeitintervall wird zusätzlich zu den Parametersätzen q₁, q₁, p_{E}, p_{PL} zur Ermittlung der Verfügbarkeit des Positionsbestimmungssystems 11 für das zukünftige Zeitintervall herangezogen. Hierzu verwenden die Verfügbarkeitsermittlungsmittel 63 ein geeignetes Prognosemodel zur Ermittlung der Verfügbarkeit des Positionsbestimmungssystems 11 für das zukünftige Zeitintervall.

Die von den Verfügbarkeitsermittlungsmitteln 63 ermittelten Informationen, die von der zweiten Anzeigeeinrichtung 65 und der dritten Anzeigeeinrichtung 67 angezeigt werden, sind stark verdichtete Informationen, die beispielsweise einem Fluglotsen eine schnelle Überprüfung der Verfügbarkeit des Positionsbestimmungssystems 11 ermöglichen. Während für den Betrieb diese verdichteten Informationen wegen ihrer Kompaktheit sehr vorteilhaft sind, wird für die Planung und die Installation des Positionsbestimmungssystems 11 ein detaillierter Einblick in die verschiedenen Parameter q₁, q₂, q₃, p_{E}, p_{PL} und Kenngrößen Q des Positionsbestimmungssystems 11 benötigt. Deshalb weist die Überwachungseinrichtung 25 die erste Anzeigeeinrichtung 73 zur Anzeige zumindest einiger der Kenngrößen Q und zumindest einiger der Parameter der Parametersätze q₁, q₁, q₃, p_{E}, p_{PL} in Abhängigkeit von der Position des Satelliten 15 auf. Weiterhin ist vorgesehen, dass die graphischen Darstellungen in Abhängigkeit von vorgegebenen Parametern, insbesondere so genannte "GAD Requirements" gemäß ICAO, Annex 10 erzeugt werden.

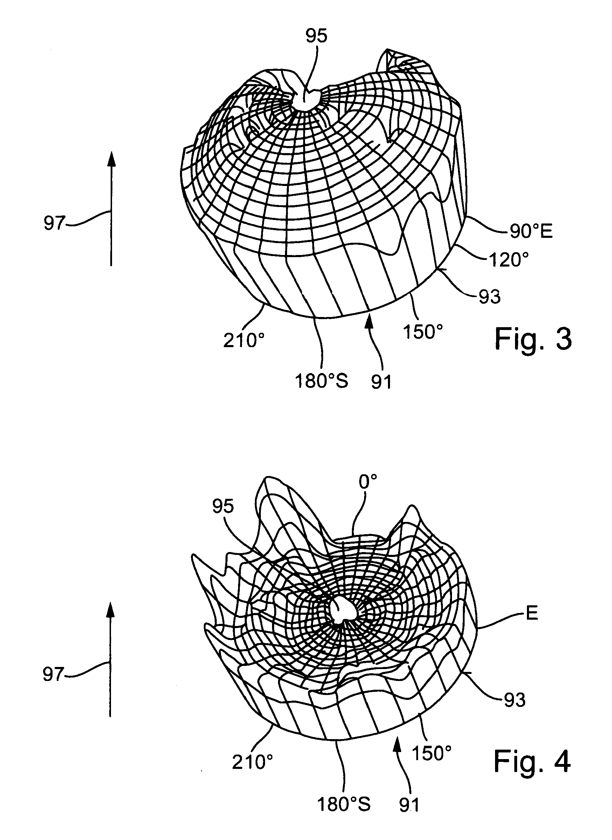

Ein Beispiel einer solchen Darstellung ist in Figur 3 gezeigt. Bei der dargestellten Kenngröße des Positionsbestimmungssystems 11 handelt es sich hier um das mittlere Signal-zu-Rausch-Verhältnis des Satellitensignals 29. Die Darstellung weist eine kreisförmige Grundfläche 91 auf. Ein bestimmter Winkel in dieser Grundfläche 91 bezogen auf eine nördliche Richtung (in Figur 3 nicht gezeigt) entspricht einem bestimmten Horizontalwinkel (Azimut). Beispielsweise entspricht eine südliche Richtung (S) einem Winkel von 180°. Eine östliche Richtung (E) entspricht einem Winkel von 90°. Eine zur Grundfläche 91 parallele Komponente eines Abstands eines Punktes von einem äußeren Rand 93 der Grundfläche 91 entspricht dem Vertikalwinkel (Elevation) der Position des Satelliten 15, wobei jeder Punkt am äußeren Rand 93 der Grundfläche 91 oder jeder Punkt senkrecht oberhalb des äußeren Rands 93 einem Vertikalwinkel von 0° entspricht und der Mittelpunkt 95 der Grundfläche 91 einem Vertikalwinkel von 90° entspricht. Je größer der Abstand des Punktes vom äußeren Rand 93 in der Darstellung ist, desto größer ist auch der Vertikalwinkel. Die Amplitude der Mittelwertskenngrößen Q ist in Richtung einer Hochachse 97 aufgetragen. Je weiter ein Punkt in Richtung der Hochachse 97 von der Grundfläche 91 entfernt ist, desto höher ist beispielsweise der Mittelwert des betreffenden Parameters (z.B. das mittlere Signal-zu-Rausch-Verhältnis). In entsprechender Weise können auch Mittelwerte anderer Kenngrößen Q oder Parameter der Parametersätze q₁, q₁, q₃, p_{E}, p_{PL} dargestellt werden.

An der Darstellung von Figur 3 ist beispielsweise zu erkennen, dass im nördlichen Bereich für geringe Vertikalwinkel das mittlere Signal-zu-Rausch-Verhältnis relativ gering ist. Folglich ist mit einer relativ geringen Genauigkeit und einer relativ schlechten Verfügbarkeit des Positionsbestimmungssystems zu rechnen.

Die erste Anzeigeeinrichtung 73 ist auch zur Erzeugung einer grafischen Darstellung einer Standardabweichung der Kenngrößen Q (zB. Signal-zu-Rausch-Verhältnisses), wie sie exemplarisch in Figur 4 dargestellt ist, eingerichtet. In Figur 4 ist auch die nördliche Richtung (N), die einem Winkel von 0° entspricht, zu erkennen. Aus Figur 4 ist ersichtlich, dass die Standardabweichung des Signal-zu-Rausch-Verhältnisses im westlichen und nordwestlichen Bereich bei geringen Vertikalwinkeln relativ hoch ist.

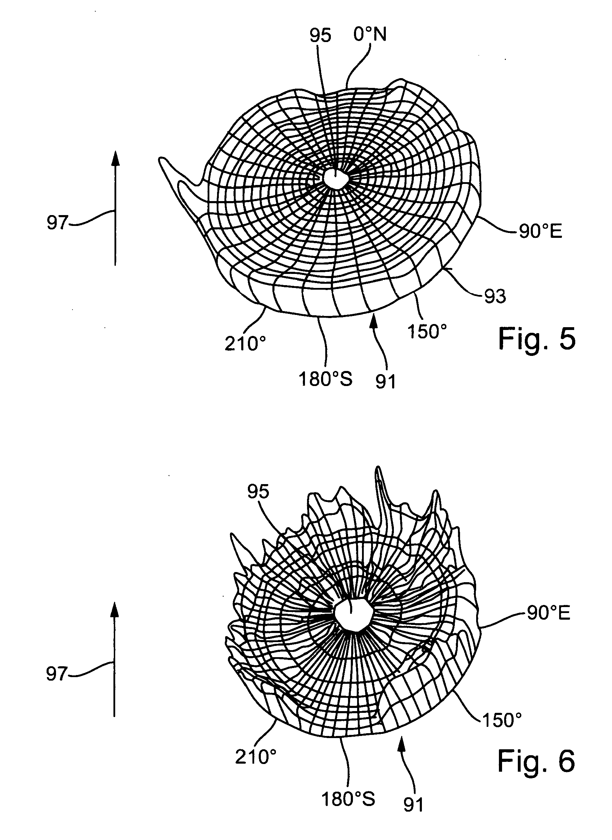

Figur 5 zeigt eine exemplarische grafische Darstellung eines mittleren Fehlers einer Pseudostrecke zwischen der Überwachungseinrichtung 25 und dem Satelliten 15, welche von der ersten Anzeigeeinrichtung 73 erzeugt werden kann. Man erkennt, dass der mittlere Fehler der Pseudostrecke in einem westlichen Bereich für geringe Vertikalwinkel der Position des Satelliten 15 relativ hoch ist.

Figur 6 zeigt eine grafische Darstellung der Standardabweichung des Fehlers der Pseudostrecke, die ebenfalls von der ersten Anzeigeeinrichtung 73 erzeugt wird. Man erkennt, dass die Standardabweichung des Fehlers der Pseudostrecke für geringe Vertikalwinkel der Position des Satelliten 15 relativ hoch.

An den Darstellungen der Figuren 3 bis 6 ist zu erkennen, dass sich insbesondere für geringe Vertikalwinkel ungünstige Kennwerte Q (geringes Signal-zu-Rausch-Verhältnis, relativ großer Fehler der Pseudostrecken, hohe Werte der Standardabweichungen) ergeben. Dies kann dadurch erklärt werden, dass der Einfluss von Hindernissen, insbesondere von Bergen, Gebäuden oder Gewässern in der Nähe der Überwachungseinrichtung 25 oder Referenzstation 17 sich bei flachen Winkeln relativ stark auswirken. Es kommt deshalb häufig zu Dämpfungen des Satellitensignals 29 oder zu einer Mehrwegeausbreitung des Satellitensignals 29 infolge von Reflexionen an den Hindernissen. Bei großen Vertikalwinkeln wirken sich die Hindernisse weniger störend aus, weil das Satellitensignal 29 zumindest annähernd senkrecht auf die ersten Empfangseinrichtung 27 der Überwachungseinrichtung 25 bzw. die dritte Empfangseinrichtung 37 der Referenzstation 17 trifft. Eine Dämpfung oder eine Mehrwegeausbreitung des Satellitensignals 29 ist somit aufgrund der Hindernisse der Umgebung der Referenzstation 17 oder der Überwachungseinrichtung 25 eher unwahrscheinlich.

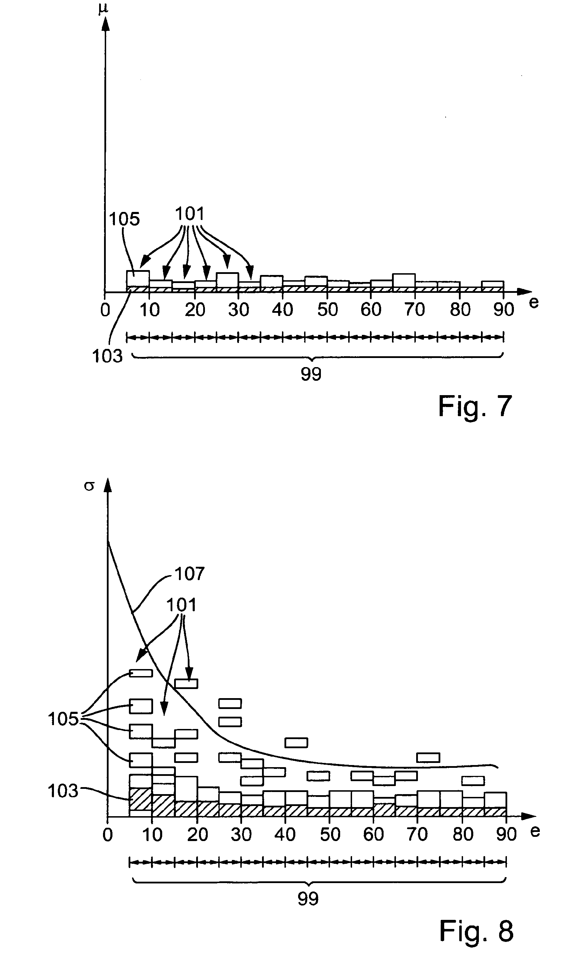

Figur 7 zeigt Verteilungsdichtefunktionen 101 einer Kenngröße Q, z.B. der mittleren Pseudostreckendifferenz (Code Minus Carrier), in Abhängigkeit von dem in Figur 7 mit dem Bezugszeichen e bezeichneten Vertikalwinkel. Ein gesamter Wertebereich von 0° bis 90° des Vertikalwinkels ist in mehrere Intervalle 99 unterteilt. Jedem Intervall 99 ist eine Verteilungsdichtefunktion 101 zugeordnet. Auf einer Hochachse µ sind Werte der mittleren Pseudostreckendifferenz aufgetragen. Ein schraffierter Bereich 103 einer Verteilungsdichtefunktion 101 markiert diejenigen Werte der mittleren Pseudostreckendifferenz, bei welchen die Verteilungsdichtefunktion 101 relativ hohe Funktionswerte aufweisen. Das heißt die Wahrscheinlichkeit, dass bei einem bestimmten Vertikalwinkel e die durch die schraffierten Bereiche 103 markierten Werte der mittleren Pseudostreckendifferenz tatsächlich auftreten, ist relativ hoch. Werte, deren Auftrittswahrscheinlichkeit bei einem bestimmten Vertikalwinkel e weniger hoch als die Auftrittswahrscheinlichkeit der mit dem schraffierten Bereich 103 markierten Werte sind mit einem Rechteck 105 markiert. Die Wahrscheinlichkeitsdichtefunktionen 101 weisen für die mit dem Rechteck 105 markierten Werte der mittleren Pseudostreckendifferenz einen entsprechend geringeren Funktionswert auf. Der Wert der Verteilungsdichtungsfunktionen 101 ist für Bereiche der mittleren Pseudostreckendifferenz, welche weder mit einem schraffierten Bereich 103 noch mit einem Rechteck 105 markiert sind, deutlich geringer als die markierten Bereiche der mittleren Pseudostreckendifferenz. Die Verteilungsdichtefunktion 101 kann in den nicht markierten Bereichen auch einen Wert von 0 aufweisen. Die Wahrscheinlichkeit, dass die nicht markierten Werte der mittleren Pseudostreckendifferenz auftreten, ist entsprechend gering.

Figur 8 zeigt eine grafische Darstellung von Verteilungsdichtefunktionen 101 einer Standardabweichung der Pseudostreckendifferenz ähnlich Figur 7. Die Darstellung der Verteilungsdichtefunktion 111 entspricht der in Figur 7 verwendeten Darstellung. Allerdings ist hier auf einer Hochachse 6 die Standardabweichung der Pseudostreckendifferenz aufgetragen. Eine Maximalwertkurve 107 beschreibt diejenigen Werte der Standardabweichung der Pseudostreckendifferenz, die beim Betrieb des Positionsbestimmungssystems 11 gerade noch zulässig sind. Anhand der Darstellung der Verteilungsdichtefunktionen 111 kann eine Wahrscheinlichkeit, dass die Standardabweichung der Pseudostreckendifferenz oberhalb der maximal zulässigen Werte liegt, leicht abgeschätzt werden.

In den Figuren 7 und 8 ist der Wertebereich der Verteilungsdichtefunktionen 101 in drei disjunkte Intervalle unterteilt. Ein erstes Intervall umfasst relativ geringe Funktionswerte der Verteilungsdichtefunktionen 101, ein zweite Intervall mittlere Funktionswerte und ein drittes Intervall hohe Funktionswerte. Hierbei sind dem zweiten Intervall mit dem Rechteck 105 markierte Bereiche und dem dritten Intervall die schraffierten Bereiche 103 zugeordnet. Abweichend hiervon kann eine andere, insbesondere höhere Anzahl in Intervallen gewählt werden. Die entsprechenden Bereiche können mittels verschiedener Schraffuren, Graustufen Farben oder dergleichen markiert werden. Beispielsweise können die Verteilungsdichtefunktionen 101 farbkodiert dargestellt werden, wobei hohe Häufigkeit in hoher Sättigung (d.h. in dunklen Tönen) wiedergegeben werden und geringe Häufigkeit in geringer Sättigung (d.h. in hellen Tönen) derselben Farbe wiedergeben werden.

## Patentansprüche

1. Überwachungseinrichtung (25) für ein augmentiertes satellitenbasiertes Positionsbestimmungssystem (11), das eine Referenzstation (17) mit einer Sendeeinrichtung (35) zum Senden eines Korrektursignals (33) aufweist, wobei die Überwachungseinrichtung (25) zur Durchführung einer Langzeitüberwachung einer Verfügbarkeit und einer Genauigkeit des Positionsbestimmungssystems (11) zum Zwecke einer Flugsicherung ausgebildet ist und umfasst:
- mindestens eine erste Empfangseinrichtung (27), die zum Empfangen von mindestens einem Satellitensignal (29) des Positionsbestimmungssystems (11) ausgebildet ist,
- mindestens eine zweite Empfangseinrichtung (31), die zum Empfangen des Korrektursignals (33) ausgebildet ist,
- erste Signalqualitätsermittlungsmittel (51), die zum Ermitteln eines ersten Parametersatzes (q₁) ausgebildet sind, der eine Qualität des Korrektursignals (33) charakterisiert,
- zweite Signalqualitätsermittlungsmittel (59), die zum Ermitteln mindestens eines zweiten Parametersatzes (q₂) ausgebildet sind, der eine Qualität des Satellitensignals (29) charakterisiert,
- Positionsfehlerermittlungsmittel (55), die zum Ermitteln eines Positionsfehlers (p_{E}) des Positionsbestimmungssystems (11) ausgebildet sind,
- Positionsunsicherheitsüberwachungsmittel (57), die zum Ermitteln eines räumlichen Positionsunsicherheitsbereichs (p_{PL}) des Positionsbestimmungssystems (11) ausgebildet sind,
- Verfügbarkeitsermittlungsmittel (63), die zum Ermitteln einer momentanen Verfügbarkeit des Positionsbestimmungssystems (11) in Abhängigkeit von dem ersten Parametersatz (q₁), dem zweiten Parametersatz (q₂), dem Positionsfehler (p_{E}) und dem räumlichen Positionsunsicherheitsbereich (p_{PL}) ausgebildet sind, und
- Überprüfungsmittel (61), die zum Überprüfen von mindestens einer Kenngröße (Q) des Positionsbestimmungssystems (11) in Abhängigkeit von einer Position eines Satelliten (15) des Positionsbestimmungssystems (11), der das Satellitensignal (29) sendet, ausgebildet sind, wobei
- die Referenzstation (17) als eine ortsfeste Bodenstation ausgebildet ist,
- es sich bei dem Korrektursignal (33) um ein im VHF-Band übertragenes Korrektursignal handelt,
- die Überprüfungsmittel (61) eine erste Anzeigeeinrichtung (73) zum Anzeigen der mindestens einen Kenngröße (Q) für verschiedene Positionen des Satelliten (15) umfassen und
- die erste Anzeigeeinrichtung (73) zum Erzeugen einer Grafik eingerichtet ist, welche die Kenngröße (Q) in Abhängigkeit von einem Horizontalwinkel und von einem Vertikalwinkel der Position des Satelliten (15) bezogen auf eine Position der Überwachungseinrichtung (25) zeigt, um einen Fluglotsen über die momentane Verfügbarkeit des Positionsbestimmungssystems (11) zu informieren.

2. Überwachungseinrichtung (25) nach Anspruch 1, **dadurch gekennzeichnet, dass** die mindestens eine auf der ersten Anzeigeeinrichtung (73) dargestellte Kenngröße (Q) mindestens eine der folgenden ist:
- der Positionsfehler (p_{E}),
- mindestens ein Parameter des zweiten Parametersatzes (q₂), und/oder
- eine statistische Kenngröße davon, insbesondere eine Standardabweichung.

3. Überwachungseinrichtung (25) nach Anspruch 1, **dadurch gekennzeichnet, dass** die mindestens eine auf der ersten Anzeigeeinrichtung (73) dargestellte Kenngröße (Q) mindestens eine der folgenden ist:
- ein Mittelwert und eine Standardabweichung einer Interreceiverdifferenz einer Pseudostrecke des Satellitensignals (29),
- ein Mittelwert und eine Standardabweichung einer differentiellen Pseudostreckendifferenz zwischen einer Pseudostrecke eines Codes des Satellitensignals (29) und einer Pseudostrecke einer integrierten Trägerphase des Satellitensignals (29),
- ein Mittelwert und eine Standardabweichung eines Signalstärke-zu-Rauschleistungs-Verhältnisses des Satellitensignals (29),
- ein Mittelwert und eine Standardabweichung von differentiellen Korrelationssignalqualitätsindikatoren, und
- ein Mittelwert und eine Standardabweichung von in eine Pseudostrecken-Ebene rücktransformierten und auf den entsprechenden Satelliten (15) bezogenen Fehlern der Position.

4. Überwachungseinrichtung (25) nach einem der vorhergehenden Ansprüche, **dadurch gekennzeichnet, dass** die graphische Darstellung der mindestens einen Kenngröße (Q) in Abhängigkeit von vorgegebenen Parametern, insbesondere von "GAD Requirements" gemäß ICAO, Annex 10, erfolgt.

5. Überwachungseinrichtung (25) nach einem der vorhergehenden Ansprüche, **dadurch gekennzeichnet, dass** die Überwachungseinrichtung (25) Spektrumsüberwachungsmittel (74) umfasst, die zum Ermitteln eines dritten Parametersatzes (q₃) ausgebildet sind, der eine Rauschleistung des Satellitensignals (29) und/oder mindestens eine statistische Kenngröße davon charakterisiert.

6. Überwachungseinrichtung (25) nach einem der vorhergehenden Ansprüche, **dadurch gekennzeichnet, dass** die Verfügbarkeitsermittlungsmittel (63) zum Ermitteln einer für ein zukünftiges Zeitintervall geschätzten Verfügbarkeit des Positionsbestimmungssystems (11) in Abhängigkeit von dem ersten Parametersatz (q₁), dem zweiten Parametersatz (q₂), dem Positionsfehler (p_{E}) und dem räumlichen Positionsunsicherheitsbereich (p_{PL}) ausgebildet sind.

7. Überwachungseinrichtung (25) nach einem der vorhergehenden Ansprüche, **dadurch gekennzeichnet, dass** die Überwachungseinrichtung (25) eine zweite Anzeigeeinrichtung (65) aufweist, die zum Anzeigen der momentanen Verfügbarkeit des Positionsbestimmungssystems (11) ausgebildet ist.

8. Überwachungseinrichtung (25) nach Anspruch 6, **dadurch gekennzeichnet, dass** die Überwachungseinrichtung (25) eine dritte Anzeigeeinrichtung (67) aufweist, die zum Anzeigen der für das zukünftige Zeitintervall geschätzten Verfügbarkeit des Positionsbestimmungssystems (11) ausgebildet list.

9. Überwachungseinrichtung (25) nach Anspruch 7 oder 8, **dadurch gekennzeichnet, dass** sich die zweite Anzeigeeinrichtung (65) in Abhängigkeit von der momentanen Verfügbarkeit und/oder die dritte Anzeigeeinrichtung (67) in Abhängigkeit von der für das zukünftige Zeitintervall geschätzten Verfügbarkeit entweder in einem ersten Anzeigezustand oder in einem zweiten Anzeigezustand befindet.

10. Überwachungseinrichtung (25) nach einem der vorhergehenden Ansprüche, **dadurch gekennzeichnet, dass** der von den ersten Signalqualitätsermittlungsmitteln (51) ermittelte erste Parametersatz (q₁) als Parameter eine Abweichung einer Nachrichtenrate von im Korrektursignal (33) enthaltenen Nachrichten von einer vorgegebenen Sollnachrichtenrate, eine Anzahl empfangener Nachrichten, einen Anteil fehlerhafter Nachrichten an den empfangenen Nachrichten und/oder ein Träger-zu-Rauschdichte-Verhältnis des Korrektursignals (33) umfasst.

11. Überwachungseinrichtung (25) nach einem der vorhergehenden Ansprüche, **dadurch gekennzeichnet, dass** der von den Positionsunsicherheitsüberwachungsmitteln (57) ermittelte Positionsunsicherheitsbereich (p_{PL}) mindestens einem Konfidenzintervall für eine vorgegebene Vertrauenswahrscheinlichkeit entspricht.

12. Überwachungseinrichtung (25) nach einem der vorhergehenden Ansprüche, **dadurch gekennzeichnet, dass** der zweite Parametersatz (q₂) als Parameter ein Träger-zu-Rauschdichte-Verhältnis des Satellitensignals (29), ein Signal-zu-Rausch-Verhältnis des Satellitensignals (29) und/oder eine Pseudosteckendifferenz zwischen einer Pseudostrecke eines Codes des Satellitensignals (29) und einer Pseudostrecke eines Trägers des Satellitensignals (29) umfasst.

13. Überwachungseinrichtung (25) nach einem der vorhergehenden Ansprüche, **dadurch gekennzeichnet, dass** das Satellitensignal (29) ein GPS-Satellitensignal ist.

14. Augmentiertes satellitenbasiertes Positionsbestimmungssystem (11) mit mindestens einer als ortsfeste Bodenstation ausgebildeten Referenzstation (17), wobei die Referenzstation (17) mindestens eine Sendeeinrichtung (35) aufweist, die zum Senden eines im VHF-Band übertragenen Korrektursignals (33) ausgebildet ist, wobei das Positionsbestimmungssystem (11) eine Überwachungseinrichtung (25) nach einem der vorhergehenden Ansprüche aufweist.

## Claims

1. A monitoring device (25) for an augmented satellite-based positioning system (11) which has a reference station (17) with a transmitting device (35) for transmitting a correction signal (33), wherein the monitoring device (25) is designed for carrying out long-term monitoring of availability and precision of the positioning system (11) for the purpose of air traffic control, said system comprising:
- at least one first receiving device (27), which is designed for reception of at least one satellite signal (29) of the positioning system (11),
- at least one second receiving device (31), which is designed for reception of the correction signal (33),
- first signal quality determination means (51), which are designed for determination of a first parameter set (q₁) which characterizes a quality of the correction signal (33),
- first signal quality determination means (59), which are designed for determination of a second parameter set (q₂) which characterizes a quality of the satellite signal (29),
- position error determination means (55), which are designed for determination of a position error (p_{E}) of the positioning system (11),
- position uncertainty monitoring means (57), which are designed for determination of a spatial position uncertainty range (p_{PL}) of the positioning system (11),
- availability determination means (63), which are designed for determination of a current availability of the positioning system (11) as a function of the first parameter set (q₁), the second parameter set (q₂), the position error (P_{E}) and the spatial position uncertainty range (p_{PL}), and
- checking means (61), which are designed for checking of at least one characteristic value (Q) of the positioning system (11) as a function of a position of a satellite (15) of the positioning system (11) which transmits the satellite signal (29),
wherein
- the reference station (17) is designed as a stationary ground station,
- the correction signal (33) is a correction signal transmitted in the VHF band,
- the checking means (61) comprise a first display device (73) for displaying the at least one characteristic value (Q) for different positions of the satellite (15), and
- the first display device (73) is configured for generation of a graph which shows the characteristic value (Q) as a function of a horizontal angle and of a vertical angle of the position of the satellite (15) relative to a position of the monitoring device (25), in order to inform air traffic controllers of the current availability of the positioning system (11).

2. The monitoring device (25) according to claim 1, **characterized in that** the at least one characteristic value (Q) displayed on the first display device (73) is at least one of the following:
- the position error (p_{E}),
- at least one parameter of the second parameter set (q₂), and/or
- a statistical characteristic value thereof, in particular a standard deviation.

3. The monitoring device (25) according to claim 1, **characterized in that** the at least one characteristic value (Q) displayed on the first display device (73) is at least one of the following:
- an average value and a standard deviation of an inter-receiver difference of a pseudorange of the satellite signal (29),
- an average value and a standard deviation of a differential pseudorange difference between a pseudorange of a code of the satellite signal (29) and a pseudorange of an integrated carrier phase of the satellite signal (29),
- an average value and a standard deviation of a signal-to-noise ratio of the satellite signal (29),
- an average value and a standard deviation of differential correlation signal quality indicators, and
- an average value and a standard deviation of errors of the position which are back-transformed into a pseudorange plane and relate to the corresponding satellites (15).

4. The monitoring device (25) according to one of the preceding claims, **characterized in that** the graphical representation of the at least one characteristic value (Q) takes place as a function of predetermined parameters, in particular from "GAD Requirements" according to ICAO, Annex 10.

5. The monitoring device (25) according to one of the preceding claims, **characterized in that** the monitoring device (25) comprises spectrum monitoring means (74) which are designed for determination of a third parameter set (q₃) which characterizes the noise of the satellite signal (29) and/or at least one statistical characteristic value thereof.

6. The monitoring device (25) according to one of the preceding claims, **characterized in that** the availability determination means (63) are designed for determination of an estimated availability of the positioning system (11) for a future time interval as a function of the first parameter set (q₁), the second parameter set (q₂), the position error (P_{E}) and the spatial position uncertainty range (p_{PL}).

7. The monitoring device (25) according to one of the preceding claims, **characterized in that** the monitoring device (25) has a second display device (65) which is designed for display of the current availability of the positioning system (11).

8. The monitoring device (25) according to Claim 6, **characterized in that** the monitoring device (25) has a third display device (67) which is designed for display of the estimated availability of the positioning system (11) for the future time interval.

9. The monitoring device (25) according to claim 7 or 8, **characterized in that** the second display device (65) is situated in a first display state or in a second display state as a function of the third current availability and/or the display device (67) is situated in a first display state or in a second display state as a function of the estimated availability for the future time interval.

10. The monitoring device (25) according to one of the preceding claims, **characterized in that** the first parameter set (q₁) determined by the first signal quality determination means (51) comprises as parameters a deviation of a message rate of messages contained in the correction signal (33) from a predetermined target message rate, a number of received messages, a proportion of defective messages among the received messages and/or a carrier-to-noise ratio of the correction signal (33).

11. The monitoring device (25) according to one of the preceding claims, **characterized in that** the position uncertainty range (p_{PL}) determined by the position uncertainty monitoring means (57) corresponds at least to a confidence interval for a predetermined confidence probability.

12. The monitoring device (25) according to one of the preceding claims, **characterized in that** the second parameter set (q₂) comprises as parameters a carrier-to-noise ratio of the satellite signal (29), a signal-to-noise ratio of the satellite signal (29) and/or a pseudorange difference between a pseudorange of a code of the satellite signal (29) and a pseudorange of a carrier of the satellite signal (29).

13. The monitoring device (25) according to one of the preceding claims, **characterized in that** the satellite signal (29) is a GPS satellite signal.

14. An augmented satellite-based positioning system (11) with at least one reference station (17) designed as a stationary ground station, wherein the reference station (17) has at least one transmitting device (35) which is designed for transmission of a correction signal (33) transmitted in the VHF band, wherein the positioning system (11) has a monitoring device (25) according to one of the preceding claims.

## Revendications

1. Dispositif de surveillance (25) pour un système de détermination de position (11) augmenté à base de satellites qui présente une station de référence (17) ayant un dispositif d'émission (35) pour émettre un signal correcteur (33), ledit dispositif de surveillance (25) étant adapté pour mettre en oeuvre une surveillance de longue durée d'une disponibilité et d'une précision dudit système de détermination de position (11) à la fin d'une sécurité de la navigation aérienne et comprenant :
- au moins un premier dispositif de réception (27) qui est adapté pour recevoir au moins un signal de satellite (29) du système de détermination de position (11),
- au moins un deuxième dispositif de réception (31) qui est adapté pour recevoir le signal correcteur (33),
- de premiers moyens de détermination de qualité de signal (51) qui sont adaptés pour déterminer un premier jeu de paramètres (q₁) qui caractérise une qualité du signal correcteur (33),
- de deuxièmes moyens de détermination de qualité de signal (59) qui sont adaptés pour déterminer au moins un deuxième jeu de paramètres (q₂) qui caractérise une qualité du signal de satellite (29),
- des moyens de détermination d'erreur de position (55) qui sont adaptés pour déterminer une erreur de position (p_{E}) du système de détermination de position (11),
- des moyens de surveillance d'incertitude de position (57) qui sont adaptés pour déterminer une zone spatiale d'incertitude de position (p_{PL}) du système de détermination de position (11),
- des moyens de détermination de disponibilité (63) qui sont adaptés pour déterminer une disponibilité momentanée du système de détermination de position (11) en fonction du premier jeu de paramètres (q₁), du deuxième jeu de paramètres (q₂), de l'erreur de position (P_{E}) et de la zone spatiale d'incertitude de position (p_{PL}), et
- des moyens de vérification (61) qui sont adaptés pour vérifier au moins une caractéristique (Q) du système de détermination de position (11) en fonction d'une position d'un satellite (15) du système de détermination de position (11), qui émet le signal de satellite (29),
dans lequel
- ladite station de référence (17) est réalisée comme une station stationnaire au sol,
- dans le cas dudit signal correcteur (33), il s'agit d'un signal correcteur transmis dans la bande VHF,
- lesdits moyens de vérification (61) comprennent un premier dispositif d'affichage (73) pour afficher ladite au moins une caractéristique (Q) pour des positions différentes du satellite (15), et
- ledit premier dispositif d'affichage (73) est conçu pour générer un graphique qui montre la caractéristique (Q) en fonction d'un angle horizontal et d'un angle vertical de la position du satellite (15) par rapport à une position du dispositif de surveillance (25) afin d'informer un contrôleur de la circulation aérienne sur la disponibilité momentanée du système de détermination de position (11).

2. Dispositif de surveillance (25) selon la revendication 1, **caractérisé par le fait que** ladite au moins une caractéristique (Q) représentée sur le premier dispositif d'affichage (73) est l'une au moins parmi les suivantes:
- l'erreur de position (p_{E}),
- au moins un paramètre du deuxième jeu de paramètres (q₂) et/ou
- une caractéristique statistique de celui-ci, en particulier un écart type.

3. Dispositif de surveillance (25) selon la revendication 1, **caractérisé par le fait que** ladite au moins une caractéristique (Q) représentée sur le premier dispositif d'affichage (73) est l'une au moins parmi les suivantes:
- une valeur moyenne et un écart type d'une différence inter-récepteur d'un pseudo-trajet du signal de satellite(29),
- une valeur moyenne et un écart type d'une différence de pseudo-trajet différentielle entre un pseudo-trajet d'un code du signal de satellite (29) et un pseudo-trajet d'une phase porteuse intégrée du signal de satellite (29),
une valeur moyenne et un écart type d'un rapport puissance de signal/puissance de bruit du signal de satellite (29),
- une valeur moyenne et un écart type d'indicateurs de qualité de signal de corrélation différentiels et
- une valeur moyenne et un écart type d'erreurs de la position retransformées dans un plan de pseudo-trajet et référées au satellite (15) correspondant.

4. Dispositif de surveillance (25) selon l'une quelconque des revendications précédentes, **caractérisé par le fait que** la représentation graphique de ladite au moins une caractéristique (Q) se fait en fonction de paramètres donnés, en particulier d' "exigences GAD" selon ICAO, annexe 10.

5. Dispositif de surveillance (25) selon l'une quelconque des revendications précédentes, **caractérisé par le fait que** le dispositif de surveillance (25) comprend des moyens de surveillance de spectre (74) qui sont adaptés pour déterminer un troisième jeu de paramètres (q₃) qui caractérise une puissance de bruit du signal de satellite (29) et/ou au moins une caractéristique statistique de celui-ci.

6. Dispositif de surveillance (25) selon l'une quelconque des revendications précédentes, **caractérisé par le fait que** lesdits moyens de détermination de disponibilité (63) sont adaptés pour déterminer une disponibilité du système de détermination de position (11) estimée pour un intervalle de temps futur, en fonction du premier jeu de paramètres (q₁), du deuxième jeu de paramètres (q₂), de l'erreur de position (p_{E}) et de la zone spatiale d'incertitude de position (p_{PL}).

7. Dispositif de surveillance (25) selon l'une quelconque des revendications précédentes, **caractérisé par le fait que** le dispositif de surveillance (25) présente un deuxième dispositif d'affichage (65) qui est adapté pour afficher la disponibilité momentanée du système de détermination de position (11).

8. Dispositif de surveillance (25) selon la revendication 6, **caractérisé par le fait que** le dispositif de surveillance (25) présente un troisième dispositif d'affichage (67) qui est adapté pour afficher la disponibilité du système de détermination de position (11) estimée pour l'intervalle de temps futur.

9. Dispositif de surveillance (25) selon la revendication 7 ou 8, **caractérisé par le fait que** le deuxième dispositif d'affichage (65) se trouve, en fonction de la disponibilité momentanée, et/ou le troisième dispositif d'affichage (67) se trouve, en fonction de la disponibilité estimée pour l'intervalle de temps futur, soit dans un premier état d'affichage soit dans un deuxième état d'affichage.

10. Dispositif de surveillance (25) selon l'une quelconque des revendications précédentes, **caractérisé par le fait que** ledit premier jeu de paramètres (q₁) déterminé par les premiers moyens de détermination de qualité de signal (51) comprend, en tant que paramètre, un écart d'un taux de messages de messages contenus dans le signal correcteur (33) par rapport à un taux de messages prescrit, un nombre de messages reçus, une part de messages erronés aux messages reçus et/ou un rapport porteuse/densité de bruit du signal correcteur (33).

11. Dispositif de surveillance (25) selon l'une quelconque des revendications précédentes, **caractérisé par le fait que** la zone d'incertitude de position (p_{PL}) déterminée par les moyens de surveillance d'incertitude de position (57) correspond à au moins un intervalle de confiance pour une probabilité de confiance donnée.

12. Dispositif de surveillance (25) selon l'une quelconque des revendications précédentes, **caractérisé par le fait que** le deuxième jeu de paramètres (q₂) comprend, en tant que paramètre, un rapport porteuse/densité de bruit du signal de satellite (29), un rapport signal/bruit du signal de satellite (29) et/ou une différence de pseudo-trajet entre un pseudo-trajet d'un code du signal de satellite (29) et un pseudo-trajet d'un support du signal de satellite (29).

13. Dispositif de surveillance (25) selon l'une quelconque des revendications précédentes, **caractérisé par le fait que** le signal de satellite (29) est un signal de satellite GPS.

14. Système de détermination de position (11) augmenté à base de satellites comprenant au moins une station de référence (17) réalisée en tant que station stationnaire au sol, dans lequel la station de référence (17) présente au moins un dispositif d'émission (35) qui est adapté pour émettre un signal correcteur (33) transmis dans la bande VHF, dans lequel ledit système de détermination de position (11) présente un dispositif de surveillance (25) selon l'une quelconque des revendications précédentes.
